# FASCICULE DE BREVET EUROPEEN

(11) **EP 4 431 549 B1**
(45) Date de publication et mention de la délivrance du brevet: **25.06.2025**
(21) Numéro de dépôt: 24163282.7
(22) Date de dépôt: 13.03.2024
(51) Int. Cl.: C08G 81/02, C08J 5/22, H01M 10/0565, C08F 8/00, C08F 8/34, C08G 63/08, C08G 64/02, C08G 64/18, C08F 212/14

(54) **PROCÉDÉ DE PRÉPARATION D'UN POLYMÈRE EN PEIGNE ET SON UTILISATION POUR FORMER UN ÉLECTROLYTE SOLIDE**
VERFAHREN ZUR HERSTELLUNG EINES KAMMPOLYMERS UND DESSEN VERWENDUNG ZUR HERSTELLUNG EINES FESTELEKTROLYTEN
METHOD FOR PREPARING COMB POLYMER AND USE THEREOF FOR FORMING SOLID ELECTROLYTE

(30) Priorité: 14.03.2023 FR 2302363
(43) Date de publication de la demande: 18.09.2024
(73) Titulaire: Commissariat à l'Energie Atomique et aux Energies Alternatives, 75015 Paris (FR)
(72) Inventeur: LANDA, Matthieu, 38054 Grenoble Cedex 09 (FR); PICARD, Lionel, 38054 Grenoble Cedex 09 (FR); BERNARD, Laurent, 38054 Grenoble Cedex 09 (FR)
(74) Mandataire: Ipsilon NNY

(56) Documents cités:
- EP-A1- 3 865 532
- EP-A1- 3 865 533
- CHRISTINA OTT ET AL: "Post-modification of poly(pentafluorostyrene): a versatile "click"; method to create well-defined multifunctional graft copolymers", CHEMICAL COMMUNICATIONS, no. 30, 1 January 2008 (2008-01-01), UK, pages 3516, XP055739549, ISSN: 1359-7345, DOI: 10.1039/b807152g
- TAO CAI ET AL: "Preparation of jellyfish-shaped amphiphilic block-graft copolymers consisting of a poly(epsilon-caprolactone)-block-poly(pentafluorostyrene) ring and poly(ethylene glycol) lateral brushes", POLYMER CHEMISTRY, vol. 3, no. 4, 1 January 2012 (2012-01-01), Cambridge, pages 1061, XP055739554, ISSN: 1759-9954, DOI: 10.1039/c2py00609j
- HYEONGRAE CHO ET AL: "Novel Anion Exchange Membrane Based on Poly(Pentafluorostyrene) Substituted with Mercaptotetrazole Pendant Groups and Its Blend with Polybenzimidazole for Vanadium Redox Flow Battery Applications", POLYMERS, vol. 12, no. 4, 1 January 2020 (2020-01-01), CH, pages 915, XP055739536, ISSN: 2073-4360, DOI: 10.3390/polym12040915
- CHEN JING ET AL: "Polyfluorinated mercaptoalcohol as a H-bond modifier of poly(2,3,4,5,6-pentafluorostyrene) (PPFS) enhancing miscibility of hydroxylated-PPFS with various acceptor polymers", POLYMER, ELSEVIER, AMSTERDAM, NL, vol. 54, no. 15, 20 May 2013 (2013-05-20), pages 3757 - 3766, XP028574970, ISSN: 0032-3861, DOI: 10.1016/J.POLYMER.2013.05.027
- MANDAL PRITHWIRAJ ET AL: "Highly Conductive Solid Polymer Electrolytes by para -Fluoro/Thiol Clicked Diblock Copolymer Self-Assembly: Paving the Way for Nanostructured Materials for Lithium-Ion Conductivity", vol. 5, no. 12, 17 November 2022 (2022-11-17), pages 15520 - 15528, XP093081978, ISSN: 2574-0962, Retrieved from the Internet <URL:https://pubs.acs.org/doi/pdf/10.1021/acsaem.2c03089> DOI: 10.1021/acsaem.2c03089
- DELAITTRE GUILLAUME ET AL: "The para -fluoro-thiol reaction as an efficient tool in polymer chemistry", vol. 9, no. 20, 1 January 2018 (2018-01-01), Cambridge, pages 2679 - 2684, XP093081944, ISSN: 1759-9954, Retrieved from the Internet <URL:https://pubs.rsc.org/en/content/articlepdf/2018/py/c8py00287h> DOI: 10.1039/C8PY00287H

## Description

### Domaine technique

La présente invention se rapporte à une nouvelle méthode de préparation d'un polymère en peigne, et au polymère en peigne ainsi obtenu.

De tels polymères en peigne peuvent être mis en œuvre, en combinaison avec des sels de métaux alcalins ou alcalino-terreux, pour former des électrolytes solides, qui trouvent des applications particulièrement avantageuses dans différents systèmes ou dispositifs électrochimiques, notamment dans des batteries rechargeables, par exemple des batteries au lithium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative. D'autres paramètres interviennent également dans le choix de l'électrolyte mis en œuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

Les électrolytes conventionnels sont classiquement issus de la dissolution d'un sel de cation métallique dans un milieu organique ou aqueux, et nécessitent pour l'élaboration d'un système électrochimique complet, un séparateur pour assurer une isolation entre l'anode et la cathode.

A ce titre, les électrolytes à l'état solide (dits encore « SSE » pour l'acronyme anglo-saxon « Solid-State Electrolyte ») représentent l'une des alternatives les plus prometteuses aux électrolytes conventionnels. Les batteries au lithium, mettant en œuvre des électrolytes à l'état solide, sont considérées comme la prochaine génération des dispositifs de stockage d'énergie, permettant d'atteindre des densités d'énergie plus élevées et une sécurité accrue du fait de l'absence de solvant. Les SSEs peuvent être classés en trois catégories : les électrolytes solides inorganiques (dits encore « ISEs » pour « Inorganic Solid Electrolytes »), les électrolytes solides polymériques (dits encore « SPEs » pour « Solid Polymer Electrolytes ») et les électrolytes solides hybrides (dits encore « HSEs » pour « Hybrid Solid Electrolytes »). Une attention particulière est portée aux SPEs et aux HSEs, électrolytes solides à base de polymères, en raison de la flexibilité élevée de ces électrolytes, qui autorise leur mise en œuvre pour l'élaboration de batteries d'épaisseur réduite et présentant une plus grande flexibilité.

A l'image d'un électrolyte liquide, ces électrolytes solides à base de polymères sont composés d'un polymère hôte dans lequel est dissous un sel de métal alcalin ou alcalino-terreux. Historiquement, les SPEs et HSEs les plus répandus, notamment pour des dispositifs électrochimiques au lithium, sont à base de polyéthers, et plus particulièrement à base de poly(éthylène glycol), également appelé poly(oxyéthylène) (POE) [1]. Toutefois, l'utilisation de ce type de polymères présente plusieurs limites. En particulier, le POE est largement cristallin (la cristallinité du POE pur est de l'ordre de 75-80 % à température ambiante), ce qui conduit à une perte de conductivité ionique de l'électrolyte solide à base de POE en dessous de sa température de fusion (environ 60-65°C). La stabilité mécanique du POE est également insuffisante aux températures élevées (supérieures à 60 °C) où il conduit bien les ions. Qui plus est, le POE présente une faible fenêtre de stabilité électrochimique (< 3,9 V vs. Li/Li⁺), ce qui rend ce type de SPEs adapté uniquement pour leur mise en œuvre avec des cathodes à bas potentiel, comme par exemple de type LiFePO₄ (LFP).

De fait, des polymères alternatifs ont été développés ces dernières années, et notamment des polycarbonates et plus particulièrement le poly(triméthylène carbonate) (PTMC). Le PTMC permet d'obtenir des performances améliorées, comparativement au POE, en termes de stabilité électrochimique (jusqu'à 5,0 V vs. Li/Li⁺), du nombre de transport ionique plus élevé (t₊≈0,8) ou encore de sa stabilité thermique. Toutefois, ces polymères présentent des performances mécaniques limitées.

Afin de pallier ces limitations, il a été proposé de synthétiser des copolymères [2-4], comportant un bloc rigide, apportant des propriétés mécaniques adaptées à leur usage en tant qu'électrolyte, et un bloc conducteur ionique. Ces copolymères peuvent être de type copolymères à blocs formés de différents polymères ou de type copolymères greffés, dits encore polymères à peigne, composés d'une chaine principale polymérique, sur laquelle sont greffées des chaines polymériques pendantes.

Récemment, il a été proposé la synthèse de polymères en peigne comprenant une chaîne principale poly(2,3,4,5,6-pentafluorostyrène) (PPFS) porteuse de chaines latérales poly(oxyde d'éthylène) ou poly(triméthylène carbonate), greffées en *para* des groupes pentafluorophényle de la chaîne principale par l'intermédiaire de liaisons éther [5-6].

D'autres exemples de polymères en peigne comprenant une chaîne principale formée à partir de monomères 1-éthényl- et/ou 1-allyl- 2,3,4,5,6-pentafluorobenzène portant des chaînes latérales sont décrits dans les articles de Ott et al., Chem. Comm., 30: 3516-3518 (2008) et de Prithwira et al., ACS Applied Energy Materials, 5: 15520-15528 (2022). Des polymères formés à partir de monomères 1-éthényl- et/ou 1-allyl- 2,3,4,5,6-pentafluorobenzène sont également décrits dans les articles de Cai et al., Polymer Chemistry, 3: 1061-1068 (2012), de Cho et al., Polymers, 12 : 1-14 (2020) et de Jing Chen et al., Polymer, 54: 3757-3766 (2013). L'article de Guillaume Delaittre *et al.,* 9: 2679-2684 (2018) se rapporte à la réaction *para*-fluoro-thiol.

Ces polymères en peigne peuvent être par exemple formés par greffage de fonctions hydroxyle sur les cycles benzéniques des unités monomériques du PPFS, par exemple en faisant réagir le polymère de type PPFS avec l'hydroxyde de potassium en présence d'eau, puis en procédant à la polymérisation des chaînes latérales directement au niveau du polymère de type PPFS fonctionnalisé par les fonctions hydroxyle. Les fonctions hydroxyle greffées présentent néanmoins une accessibilité limitée lors de la polymérisation ultérieure des chaînes polymériques latérales, entrainant une perte de contrôle de la structure du polymère en peigne.

Il demeure ainsi un besoin de proposer une nouvelle voie de synthèse de polymères conducteurs ioniques en peigne, permettant d'améliorer le contrôle des caractéristiques des polymères obtenus, en particulier en termes de taux de greffage, de longueur de chaîne et de polydispersité des chaînes pendantes, et ainsi d'optimiser les performances des électrolytes solides formés à base de ces polymères.

La présente invention vise précisément à répondre à ce besoin.

### Exposé de l'invention

L'invention concerne ainsi, selon un premier de ses aspects, un procédé de préparation d'un polymère en peigne comprenant au moins les étapes consistant en :
(i) disposer d'un polymère formé à partir de monomères 1-éthényl- et/ou 1-allyl- 2,3,4,5,6-pentafluorobenzène, dit « polymère de type PPFS », destiné à former la chaîne principale du polymère en peigne ;
(ii) procéder à la fonctionnalisation d'une partie des groupements pentafluorophényle des unités monomériques du polymère de type PPFS par des fonctions hydroxyles pendantes, par réaction dudit polymère de type PPFS avec au moins une molécule, dite « mercapto-alcool », comportant une ou plusieurs fonctions hydroxyles libres, de préférence une seule fonction hydroxyle libre, et une fonction thiol libre, ladite fonctionnalisation faisant intervenir une réaction de substitution nucléophile entre l'atome de fluor en position *para* du groupement pentafluorophényle et la fonction thiol portée par ledit mercapto-alcool; et
(iii) procéder à la formation de chaînes latérales de type polyester/polycarbonate sur le polymère PPFS fonctionnalisé obtenu en étape (ii), par polymérisation par ouverture de cycle à partir d'au moins un monomère cyclique de cinq à huit chaînons choisi parmi les lactones et les carbonates cycliques.

Par « polymère en peigne », également désigné copolymère ramifié ou branché, on entend un polymère qui présente une chaîne principale polymérique linéaire et au moins deux chaînes latérales ou chaînes pendantes fixées à la chaîne principale en des points situés entre les deux extrémités de la chaîne principale, appelés points de ramification ou points de branchement. A la différence des polymères linéaires qui comportent des groupements latéraux ou groupes pendants non polymériques, les chaînes latérales des polymères en peigne sont des oligomères, des polymères ou des copolymères.

En particulier, un polymère en peigne est distinct de réseaux de polymères dits hyperbranchés ou hyper-ramifiés. En particulier, les chaînes polymériques latérales portées par la chaîne principale du polymère en peigne selon l'invention ne sont pas elles-mêmes porteuses de chaînes polymériques latérales.

On désignera plus simplement dans la suite du texte sous l'appellation « polymère en peigne » ou « polymère peigne », le polymère en peigne obtenu selon l'invention.

Dans la présente description, en l'absence d'indications contraires, le terme « polymère » sera utilisé pour désigner, au sens large, aussi bien des homopolymères que des copolymères. Par « copolymère », on entend un polymère dérivé d'au moins deux espèces différentes de monomères.

Par « unité monomérique », on entend dans le cadre de la présente invention la plus petite unité constitutive dont la répétition conduit à une chaîne polymérique.

Par « chaîne latérale de type polyester/polycarbonate » ou plus simplement « chaîne polyester/polycarbonate », on entend désigner une chaîne polymérique obtenue à partir d'un ou plusieurs monomères cycliques de cinq à huit chaînons choisis parmi des lactones et des carbonates cycliques. Il peut s'agir en particulier d'une chaîne de type homopolymère, par exemple d'une chaîne polycarbonate obtenue à partir de la polymérisation d'un carbonate cyclique, ou d'une chaîne polyester obtenue à partir de la polymérisation d'une lactone, ou encore d'une chaîne de type copolymère, obtenue à partir de la polymérisation d'au moins deux monomères cycliques différents.

A l'issue de l'étape de fonctionnalisation (ii) du procédé de l'invention, le polymère de type PPFS présente ainsi des fonctions hydroxyle libres liées en position *para* d'une partie des groupements pentafluorophényle par l'intermédiaire de liaisons thioéther.

Les fonctions hydroxyles greffées au niveau du polymère de type PPFS vont servir en étape (iii) à amorcer la réaction de polymérisation par ouverture de cycle. Le polymère de type PPFS ainsi fonctionnalisé par des fonctions hydroxyles sert ainsi de « macro-amorceur » pour la polymérisation des chaînes latérales du polymère peigne selon l'invention.

A l'issue de l'étape de polymérisation (iii) du procédé de l'invention, le polymère de type PPFS présente ainsi des chaînes polycarbonates/polyesters liées en position *para* d'une partie des groupements pentafluorophényle par l'intermédiaire de liaisons thioéther.

L'invention concerne ainsi, selon un autre de ses aspects, un polymère en peigne, en particulier tel qu'obtenu selon le procédé de l'invention décrit précédemment, comprenant une chaîne principale de type PPFS formée à partir de monomères 1-éthényl- et/ou 1-allyl-2,3,4,5,6-pentafluorobenzène, une partie des unités monomériques de la chaîne principale étant porteuse de chaînes latérales polymériques, dites chaînes polycarbonates/polyesters, formées à partir d'au moins un monomère cyclique de cinq à huit chaînons choisi parmi des lactones et des carbonates cycliques ; lesdites chaînes polymériques latérales étant greffées *en para* des groupes pentafluorophényle par l'intermédiaire de liaisons thioéther.

En particulier, lesdites chaînes polycarbonates/polyesters sont des chaines poly(triméthylène carbonate) (PTMC) ou poly(ε-caprolactone) (PCL), en particulier présentant des fonctions hydroxyles en extrémité de chaîne sous forme protégée, résultant de la réaction de ladite fonction hydroxyle avec un agent de protection tel que détaillé dans la suite du texte.

De préférence, comme détaillé dans la suite du texte, la réaction de substitution nucléophile pour le greffage du mercapto-alcool au niveau du polymère de type PPFS en étape (ii) est opérée en présence d'une base aprotique faible. Avantageusement, la mise en œuvre d'une base faible permet une substitution en *para* des groupes pentafluorophényle chimio-sélective et ainsi un bon contrôle du greffage du mercato-alcool, seule la fonction thiol réagissant en présence d'une base faible et seule l'atome de fluor en *para* des groupes pentafluorophényle est substitué.

La réaction de substitution nucléophile pour le greffage du mercapto-alcool au niveau du polymère de type PPFS en étape (ii) est ainsi opérée en présence d'une base aprotique plus faible que l'hydrure de sodium (NaH), l'hydroxyde de sodium et l'hydroxyde de potassium, de préférence d'une base aprotique présentant un pKa strictement inférieur à 15 et strictement supérieur à 10. En particulier, la réaction de substitution nucléophile peut être opérée en présence d'une base présentant un pKa strictement inférieur à 14, plus particulièrement inférieur ou égal à 13 et strictement supérieur à 10, voire compris entre 10,2 et 13, tels que le 1,8-diazabicyclo[5.4.0]undéc-7-ène (DBU), la triéthylamine (TEA) ou le carbonate de potassium (K₂CO₃), en particulier le DBU ou la TEA.

Avantageusement, le procédé de l'invention permet un excellent contrôle du taux de greffage des chaînes latérales de type polycarbonate/polyester. Le taux de greffage peut être plus particulièrement ajusté en faisant varier le rapport molaire entre le mercapto-alcool et les unités monomériques du polymère de type PPFS lors de l'étape (ii) de fonctionnalisation. De préférence, comme détaillé dans la suite du texte, le taux de greffage molaire obtenu en étape (ii) dudit mercapto-alcool au niveau du polymère de type PPFS ne dépasse pas 35%, pour assurer une bonne solubilisation dudit polymère de type PPFS fonctionnalisé, dit « macro-amorceur », dans le milieu solvant mis en œuvre pour la polymérisation des chaînes latérales en étape (iii).

Ainsi, le taux de greffage molaire des chaînes latérales polycarbonates/polyesters du polymère peigne obtenu selon l'invention est de préférence compris entre 1 % et 35 %, notamment entre 5 % et 35 %.

Avantageusement, la fonctionnalisation du polymère de type PPFS par l'utilisation d'un mercapto-alcool permet à la fonction hydroxyle d'être plus accessible pour la polymérisation des chaînes latérales.

Également, le procédé selon l'invention permet un excellent contrôle de la polymérisation des chaînes latérales, en particulier de la masse molaire et de la polydispersité des chaînes polycarbonates/polyesters obtenues.

En particulier, le procédé de l'invention autorise une grande variabilité de la masse molaire moyenne en nombre en chaînes latérales du polymère peigne obtenu. La masse molaire moyenne en nombre peut être plus particulièrement ajustée en faisant varier, en étape (iii), le rapport molaire entre les monomères cycliques et les fonctions hydroxyles greffées sur le PPFS.

En particulier, la masse molaire moyenne en nombre Mn des chaînes latérales polycarbonates/polyesters peut ainsi être comprise entre 800 g.mol⁻¹ et 10 000 g.mol⁻¹. Avantageusement, la masse molaire moyenne en nombre peut être inférieure ou égale à 2000 g.mol⁻¹, en particulier être comprise entre 800 g.mol⁻¹ et 2000 g.mol⁻¹ et plus particulièrement entre 800 g.mol⁻¹ et 1500 g.mol⁻¹.

Par ailleurs, comme détaillé dans la suite du texte, les inventeurs ont avantageusement développé une méthode de purification du polymère peigne obtenu selon l'invention, aisée à mettre en œuvre et permettant d'éliminer les chaines de polycarbonates/polyesters n'ayant pas été greffées au niveau du polymère de type PPFS.

La méthode de synthèse des chaînes latérales du polymère peigne selon l'invention, associée à une purification du produit obtenu, permet d'accéder, de manière reproductible, à des polymères peignes de bonne pureté et de structure contrôlée, en particulier présentant des chaînes greffées de masse molaire contrôlée et de faible polydispersité.

Il est ainsi possible de faire varier les caractéristiques du polymère peigne, en particulier en termes de de longueur des chaines latérales, de manière à optimiser les performances de l'électrolyte solide formé à partir de ces polymères.

De manière avantageuse, les fonctions hydroxyles aux extrémités des chaines polycarbonates/polyesters greffées du polymère peigne selon l'invention sont protégées. Comme détaillé dans la suite du texte, la protection des fonctions hydroxyles peut être plus particulièrement réalisée au niveau du polymère peigne obtenu, avant ou après purification, par réaction de la ou desdites fonctions hydroxyles aux extrémités des chaînes polycarbonates/polyesters latérales, avec au moins un composé, dit agent de protection, choisi parmi les chlorures d'acyle, les anhydrides d'acide et les isocyanates.

Les polymères en peigne selon l'invention trouvent des applications particulièrement avantageuses pour former, en combinaison avec au moins un sel de métal alcalin ou alcalino-terreux, un électrolyte solide.

Par « électrolyte solide », on entend un électrolyte excluant la présence d'un composant sous forme liquide, et faisant office à la fois de séparateur et de conducteur ionique dans un système électrochimique. L'électrolyte solide selon l'invention se présente plus particulièrement sous la forme d'un film ou membrane électrolytique solide dans un système électrochimique.

Comme détaillé dans la suite du texte, les électrolytes solides préparés selon l'invention peuvent être de type électrolyte polymérique solide (SPE) ou électrolyte solide hybride (HSE). Les films ou membranes d'électrolyte solide préparés selon l'invention présentent avantageusement une bonne flexibilité.

L'invention concerne ainsi, selon un autre de ses aspects, l'utilisation d'au moins un polymère en peigne selon l'invention, en particulier tel qu'obtenu selon le procédé de l'invention, pour former, en combinaison avec au moins un sel de métal alcalin ou alcalino-terreux, un électrolyte solide destiné à un système électrochimique, en particulier à une batterie rechargeable, notamment une batterie au lithium.

L'invention concerne encore un électrolyte solide, notamment de type électrolyte polymérique solide (SPE) ou électrolyte solide hybride (HSE), comprenant, voire étant formé de :
- au moins un polymère en peigne selon l'invention, en particulier obtenu selon le procédé de l'invention, de préférence dont les fonctions hydroxyles aux extrémités des chaînes latérales greffées sont protégées ;
- au moins un sel de métal alcalin ou alcalino-terreux, en particulier un sel de lithium ; et
- éventuellement une ou plusieurs charges inorganiques, en particulier choisies parmi les charges conductrices et les charges non conductrices du ou des cations alcalins ou alcalino-terreux, en particulier du lithium.

Les électrolytes solides formés selon l'invention peuvent trouver des applications dans des systèmes électrochimiques variés, notamment dans des systèmes de stockage de l'énergie, en particulier dans des batteries rechargeables, notamment des batteries au lithium.

Ainsi, l'invention concerne encore l'utilisation d'un électrolyte solide selon l'invention dans un système électrochimique, en particulier dans une batterie au lithium.

Elle concerne encore un système électrochimique, en particulier un dispositif de stockage de l'énergie, notamment une batterie rechargeable, en particulier une batterie au lithium, notamment une batterie lithium-ion ou lithium-métal, comprenant un électrolyte solide, en particulier un film d'électrolyte solide tel que défini précédemment.

Comme illustré dans les exemples qui suivent, les électrolytes solides obtenus à partir des polymères en peigne selon l'invention conduisent à des batteries au lithium présentant d'excellentes performances, en particulier une conductivité ionique élevée, par exemple supérieure ou égale à 10⁻⁷ S.cm⁻¹ à 60°C, en particulier supérieure ou égale à 10⁻⁶ S.cm⁻¹, avantageusement supérieure ou égale à 10⁻⁵ S.cm⁻¹.

Les électrolytes solides préparés à partir des polymères peigne selon l'invention présentent également une bonne tenue mécanique et une grande stabilité thermique (qui assure la sécurité des dispositifs de stockage d'énergie les comprenant).

Un système électrochimique, par exemple une batterie au lithium, comprenant un électrolyte solide selon l'invention, peut fonctionner sur une large plage de température, de préférence entre 20 °C et 100 °C, plus préférentiellement entre 40 °C et 80 °C.

De manière avantageuse, un électrolyte solide à base d'un polymère en peigne selon l'invention, en particulier comprenant des chaînes latérales de type PTMC, peut être avantageusement mis en œuvre dans des batteries de densité énergétique élevée, en combinaison avec des électrodes positives dites à « haut » potentiel, c'est-à-dire fonctionnant à une différence de potentiel supérieure à 4 V versus Li/Li⁺, telles que des batteries Li⁰ vs. LiNi_{1/3}Mn_{1/3}Co_{1/3}O₂, sans impacter la stabilité thermique et électrochimique de l'électrolyte.

D'autres caractéristiques, variantes et avantages du procédé de préparation d'un polymère peigne selon l'invention, du polymère peigne obtenu et de sa mise en œuvre dans un système électrochimique, ressortiront mieux à la lecture de la description, des exemples et figures qui vont suivre, donnés à titre illustratif et non limitatif de l'invention.

Dans le cadre de l'invention, on entend par :
- « C_{t-z} » où t et z sont des entiers, une chaîne carbonée pouvant avoir de t à z atomes de carbone ; par exemple C₁₋₄ une chaîne carbonée qui peut avoir de 1 à 4 atomes de carbone ;
- « alkyle », un groupe aliphatique saturé, linéaire ou ramifié ; par exemple un groupe C₁₋₄-alkyle représente une chaîne carbonée de 1 à 4 atomes de carbone, linéaire ou ramifiée, plus particulièrement un méthyle, éthyle, propyle, isopropyle, butyle, isobutyle, *tert*-butyle ;
- « alkylène », un radical divalent saturé, linéaire ou ramifié, dérivé d'un alkyle. Par exemple un groupe C₁-C₃-alkylène représente une chaine carbonée saturée, linéaire ou ramifiée, de 1 à 3 atomes de carbone, par exemple un méthylène, éthylène, 1-méthyléthylène ou propylène.
- « groupement polycyclique », un groupement présentant deux ou plusieurs noyaux (cycles), condensés (ortho-condensés ou ortho- et péri-condensés) les uns aux autres, c'est-à-dire présentant, deux à deux, au moins deux carbones en commun.
- « hétérocycle », un groupe cyclique, de préférence à 4, 5 ou 6 chaînons, comprenant un ou plusieurs hétéroatomes, en particulier choisis parmi l'oxygène, le soufre et l'azote. Les groupements mono- ou poly(hétéro)cycliques selon l'invention peuvent être insaturés, partiellement saturés ou saturés. Un cycle aromatique peut être notamment le benzène.

Dans la suite du texte, les expressions « compris entre ... et ... », « allant de ... à ... » et « variant de ... à ... » sont équivalentes et entendent signifier que les bornes sont incluses, sauf mention contraire.

### Brève description des dessins

[Fig 1] représente l'intensité du signal de mesure obtenu par résonance magnétique nucléaire (RMN) de ¹⁹F en fonction du déplacement chimique, exprimé en ppm, pour le polymère poly(2,3,4,5,6-pentafluorostyrène) ("PPFS-03") synthétisé en exemple 1.1.
[Fig 2] représente le diagramme d'élution obtenu par Chromatographie d'Exclusion Stérique (CES) dans du THF à 30°C (calibration TDS), en fonction du volume de rétention, obtenu pour le polymère poly(2,3,4,5,6-pentafluorostyrène) ("PPFS-03") synthétisé en exemple 1.1. L'ordonnée représente la détection obtenue par un détecteur de viscosité intrinsèque (IV-DP), diffusion de la lumière à faible angle (« low angle light scattering », LALS), diffusion de la lumière à angle droit (« right angle light scattering », RALS), et un réfractomère (RI).
[Fig 3] représente le diagramme d'élution obtenu par CES (THF, 30°C, calibration TDS), en fonction du volume de rétention, obtenu pour le polymère poly(2,3,4,5,6-pentafluorostyrène) ("PPFS-Em-01") synthétisé en exemple 1.2.
[Fig 4] représente l'intensité du signal de mesure obtenu par résonance magnétique nucléaire (RMN) de ¹⁹F en fonction du déplacement chimique, exprimé en ppm, pour le polymère poly(2,3,4,5,6-pentafluorostyrène) ("PPFS-Em-01") synthétisé en exemple 1.2.
[Fig 5] représente l'intensité du signal de mesure obtenu par RMN de ¹⁹F en fonction du déplacement chimique, exprimé en ppm, pour le poly(2,3,4,5,6-pentafluorostyrène) fonctionnalisé par le 6-mercaptohexan-1-ol ("PPFS-g-S-OH-01") synthétisé en exemple 2.1.
[Fig 6] représente l'intensité du signal de mesure obtenu par RMN de ¹⁹F en fonction du déplacement chimique, exprimé en ppm, pour le poly(2,3,4,5,6-pentafluorostyrène) fonctionnalisé par le 6-mercaptohexan-1-ol ("PPFS-g-S-OH-02") synthétisé en exemple 2.2.
[Fig 7] représente l'intensité du signal de mesure obtenu par RMN de ¹H en fonction du déplacement chimique, exprimé en ppm, pour le copolymère peigne poly(2,3,4,5,6-pentafluorostyrène) porteurs de greffons poly(triméthylène carbonate) ("PPFS-g-S-PTMC-OH-03") synthétisé en exemple 3.1.
[Fig 8] représente le diagramme d'élution obtenu CES (THF, 30°C, calibration TDS), en fonction du volume de rétention, pour le copolymère peigne poly(2,3,4,5,6-pentafluorostyrène) porteurs de greffons poly(triméthylène carbonate) ("PPFS-g-S-PTMC-OH-03") synthétisé en exemple 3.1.
[Fig 9] représente l'intensité du signal de mesure obtenu par RMN de ¹H en fonction du déplacement chimique, exprimé en ppm, pour le copolymère peigne poly(2,3,4,5,6-pentafluorostyrène) porteurs de greffons poly(triméthylène carbonate) ("PPFS-g-S-PTMC-OH-04") synthétisé en exemple 3.2.
[Fig 10] représente le diagramme d'élution obtenu CES (THF, 30°C, calibration TDS), en fonction du volume de rétention, pour le copolymère peigne poly(2,3,4,5,6-pentafluorostyrène) porteurs de greffons poly(triméthylène carbonate) ("PPFS-g-S-PTMC-OH-04") synthétisé en exemple 3.2.
[Fig 11] représente l'évolution de la conductivité ionique (en S.cm⁻¹) en fonction de la température (T en °C, et 1000/T, T étant exprimée en degré Kelvin) pour les électrolytes solides à base des polymères en peigne "PPFS-g_{0,2}-S-PTMC₁₀₀₀-OH" et "PPFS-g_{0,2}-S-PTMC₈₀₀-OH" préparés selon l'exemple 4.

### Description détaillée

### POLYMERE EN PEIGNE

### (i) Polymère de type PPFS destiné à former la chaîne principale du polymère peigne

Comme évoqué précédemment, le polymère peigne selon l'invention est formé à partir d'un polymère obtenu à partir de monomères 1-éthényl- et/ou 1-allyl- 2,3,4,5,6-pentafluorobenzène, et destiné à former la chaîne principale du polymère en peigne.

Le polymère de type PPFS peut être un homopolymère ou un copolymère.

Les monomères de type 1-éthényl-2,3,4,5,6-pentafluorobenzène, encore appelés plus couramment 2,3,4,5,6-pentafluorostyrène (PFS) et 1-allyl-2,3,4,5,6-pentafluorobenzène (nom IUPAC 1,2,3,4,5-pentafluoro-6-prop-2-énylbenzène) répondent à la formule (M1) suivante : 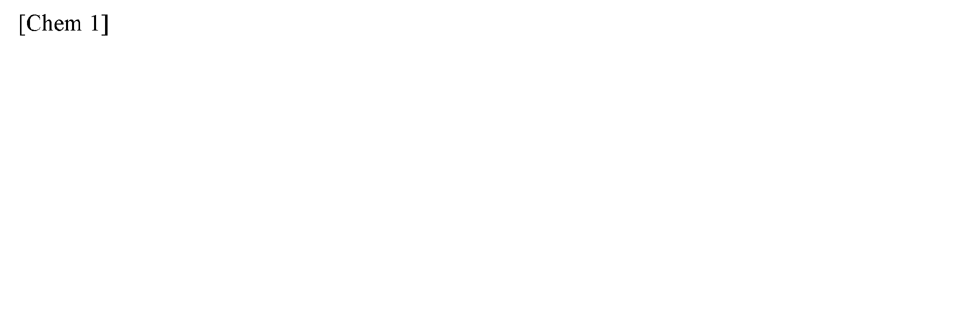 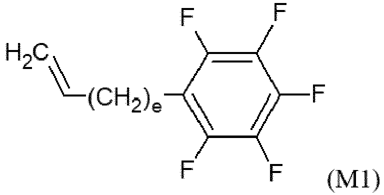 dans laquelle e vaut 0 (cas du pentafluorostyrène) ou e vaut 1 (cas du 1-allyl-2,3,4,5,6-pentafluorobenzène).

De préférence, le polymère de type PPFS est un homopolymère.

A titre d'exemple, le polymère de type PPFS peut être un poly(2,3,4,5,6-pentafluorostyrène) (PPFS) ou un poly(1,2,3,4,5-pentafluoro-6-prop-2-énylbenzène), de préférence un poly(2,3,4,5,6-pentafluorostyrène).

A des fins de simplification, on désigne plus simplement les polymères dérivés de monomères 1-éthényl- et/ou 1-allyl- 2,3,4,5,6-pentafluorobenzène, en particulier de type poly(2,3,4,5,6-pentafluorostyrène) ou poly(1,2,3,4,5-pentafluoro-6-prop-2-énylbenzène), sous la dénomination « polymère de type pentafluorostyrène » ou encore « polymère de type PPFS ».

Le polymère de type PPFS mis en œuvre pour former la chaîne principale d'un polymère en peigne selon l'invention présente avantageusement une masse molaire moyenne en nombre Mₙ supérieure ou égale à 10 000 g.mol⁻¹, en particulier comprise entre 10 000 g.mol⁻¹ et 1 000 000 g.mol⁻¹, en particulier entre 40 000 g.mol⁻¹ et 600 000 g.mol⁻¹, plus particulièrement comprise entre 40 000 g.mol⁻¹ et 400 000 g.mol⁻¹, voire comprise entre 50 000 g.mol⁻¹ et 100 000 g.mol⁻¹.

La masse moléculaire moyenne en nombre, dite encore masse molaire moyenne en nombre, d'un polymère de type PPFS peut être déterminée par chromatographie d'exclusion stérique (CES), de préférence avec une calibration TDS.

En particulier, le degré de polymérisation moyen en nombre du polymère de type PPFS, correspondant au nombre d'unités monomères constitutives du polymère, peut être supérieur ou égal à 50, en particulier compris entre 50 et 4 200 et plus particulièrement compris entre 50 et 520.

Selon un mode de de réalisation particulier, le polymère de type PPFS destiné à former la chaîne principale d'un polymère en peigne selon l'invention est un poly(2,3,4,5,6-pentafluorostyrène) (PPFS), en particulier présentant une masse moléculaire moyenne en nombre comprise entre 10 000 g.mol⁻¹ et 600 000 g.mol⁻¹ et plus particulièrement entre 40 000 g.mol⁻¹ et 100 000 g.mol⁻¹.

De préférence, la longueur du polymère de type PPFS, destiné à former la chaîne principale du polymère en peigne selon l'invention, autrement dit le degré de polymérisation du polymère de type PPFS formant la chaîne principale du polymère en peigne selon l'invention, est suffisamment élevée, de sorte que le polymère en peigne formé selon l'invention présente une masse molaire supérieure à la masse molaire dite d'enchevêtrement critique.

La masse molaire d'enchevêtrement critique, notée M_{c}, pour un polymère donné, est généralement définie comme la masse à partir de laquelle la dynamique du polymère se situe dans un régime de reptation. Cette masse molaire d'enchevêtrement critique peut être déterminée de manière empirique par des méthodes connues de l'homme du métier.

Le contrôle de la masse moléculaire moyenne du polymère en peigne selon l'invention permet de contrôler les propriétés mécaniques du polymère en peigne obtenu, et en particulier ses propriétés de viscoélasticité.

Le polymère en peigne selon l'invention est avantageusement apte à former un réseau tridimensionnel, résultant de l'enchevêtrement des chaînes polymériques, et présente un plateau caoutchoutique identifiable par exemple par des mesures rhéologiques (par exemple, module d'Young et module de cisaillement mesurés en analyse mécanique dynamique multifréquence) sur le polymère formé.

Dans un mode de réalisation particulier, le polymère de type PPFS répond à la formule (I) suivante : 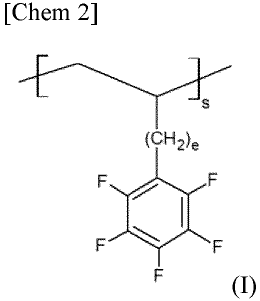 dans laquelle e vaut 0 ou 1 ;
s représente le nombre d'unités monomériques du polymère de type PPFS (correspondant au degré de polymérisation), en particulier s est supérieur ou égal à 50, en particulier compris entre 50 et 4 200.

Le polymère de type PPFS mis en œuvre dans le procédé selon l'invention, destiné à former la chaîne principale d'un polymère en peigne selon l'invention, peut être obtenu au préalable par des méthodes de synthèse connues de l'homme du métier. Par exemple, il peut être synthétisé par une méthode de polymérisation radicalaire, en particulier par polymérisation radicalaire contrôlée, telle que décrite par exemple par Atanasov *et al.* [7].

Alternativement, il peut être synthétisé par catalyse Ziegler-Natta. Les procédés de polymérisation Ziegler-Natta sont bien connus par exemple pour la synthèse de polystyrène [8]. Ils ont été décrits dans le cas de la synthèse du PPFS dans le document EP 3 763 748 A1 [9].

Avantageusement, la synthèse par catalyse Ziegler-Natta permet de conduire à des polymères de masses moléculaires moyennes et de dispersité ajustables, avec de bons rendements.

Le polymère de type PPFS peut ainsi être formé par polymérisation à partir du mélange d'un système catalytique de type Ziegler Natta comprenant un catalyseur et un co-catalyseur ; et de monomères 1-éthényl- et/ou 1-allyl- 2,3,4,5,6-pentafluorobenzène.

Cette méthode de synthèse comprend plus particulièrement :
- la mise en contact d'un système catalytique de type Ziegler Natta comprenant un catalyseur et un co-catalyseur ; avec des monomères de formule (M1) précitée ;
- l'exposition du mélange ainsi formé à des conditions d'agitation et de chauffage propice à la polymérisation desdits monomères.

Le système catalytique de type Ziegler-Natta peut être de toutes générations, i.e. 1, 2, 3, 4 ou ultérieures. Ledit système catalytique peut être supporté, homogène ou hétérogène.

Le système catalytique de type Ziegler Natta mis en œuvre pour la synthèse du polymère de type PPFS peut comprendre :
- un catalyseur contenant un dérivé, notamment un halogénure ou un alcoolate, d'un métal de transition du groupe IV, V ou VI de la classification périodique des éléments, de préférence choisi parmi le titane, le zirconium, le vanadium, le cobalt, le chrome et le nickel ; et
- un co-catalyseur contenant un hydrure ou un dérivé alkylé d'un élément des colonnes 1, 2 ou 13 de la classification périodique des éléments, et de préférence contenant un hydrure ou un dérivé alkylé d'aluminium.

Selon une variante particulière de ce mode de réalisation, le catalyseur contenant un dérivé d'un métal de transition du groupe IV, V ou VI de la classification périodique des éléments est choisi parmi TiCl₄, TiCl₃, VCl₃, VCl₄, CoCl₂, Ti(OBu)₄ et Cr(acac)₃.

En particulier, le co-catalyseur contenant un hydrure ou un dérivé alkylé d'un élément des colonnes 1, 2 ou 13 de la classification périodique des éléments est choisi parmi AlEt₃, AlEt₂Cl, AlEtCl, AlEtCl₂, AlBu₃, GaEt₃ et BeEt₂. De manière préférée, selon ce mode de réalisation, le système catalytique est choisi parmi TiCl₄/AlEt₃, TiCl₃/AlEt₂Cl, TiCl₃/GaEt₃, TiCl₃/BeEt₂, VCl₄/AlEt₂Cl, CoCl₂/AlEtCl, VCl₃/AlEt₃, Ti(OBu)₄/AlEt₃, Cr(acac)₃/AlEt₃, et encore plus préférentiellement est TiCl₄/AlEt₃.

Un tel système catalytique de type Ziegler-Natta peut être par exemple préparé en ajoutant du triéthyl aluminium à du chlorure de titane, puis en laissant stabiliser le mélange pendant 30 minutes.

Alternativement, le système catalytique de type Ziegler-Natta peut comprendre :
- du TiCl₄ supporté sur du MgCl₂ à titre de catalyseur ; et
- du AlEt₃ à titre de co-catalyseur.

Alternativement, le système catalytique de type Ziegler Natta peut comprendre :
- un catalyseur choisi parmi les métallocènes ; et
- un co-catalyseur choisi parmi le méthylaluminoxane (MAO), Ph₃C⁺B(C₆F₅)₄⁻ et B(C₆F₅)₃.

De manière préférée, selon ce mode de réalisation, le système catalytique est choisi parmi ZrCp₂Cl₂/MAO, ZrCp₂Cl₂/B(C₆F₅)₃, ZrCp₂Cl₂/Ph₃C⁺B(C₆F₅)₄⁻, CpTiCl₃/MAO, et

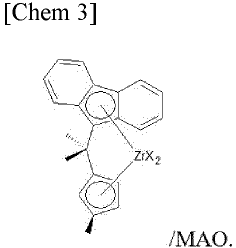

Selon un mode de réalisation préféré, le ratio molaire catalyseur/co-catalyseur est compris entre 0,3 et 10, de préférence compris entre 0,5 et 2.

La mise en contact d'un système catalytique de type Ziegler-Natta, en particulier tel que défini précédemment, avec les monomères de formule (M1) précitée peut être effectuée par simple mélange, en présence ou non d'un solvant tel que le fluorobenzène ou le tétrahydrofurane. Le ratio molaire monomères (M1)/système catalytique peut être compris entre 10 et 1000, en particulier entre 10 et 250.

Le mélange est ensuite exposé à des conditions d'agitation et de chauffage propices à la polymérisation des monomères (M1). En particulier, le mélange peut être exposé à un palier de température compris entre 60°C et 80°C, notamment pendant une durée d'au moins 10 heures. L'agitation peut être opérée de manière manuelle ou mécanique, en particulier à l'aide d'un dispositif classique d'agitation.

De préférence, la synthèse du polymère de type PPFS est suivie d'une étape de neutralisation du catalyseur, par exemple avec de l'éthanol, puis de filtration du système catalytique. Le polymère de type PPFS ainsi formé peut être précipité, par exemple dans du méthanol.

### (ii) Fonctionnalisation du polymère de type PPFS par des fonctions hydroxyles pendantes

Comme évoqué précédemment, le polymère de type PPFS est fonctionnalisé par des fonctions hydroxyles pendantes, *via* le greffage en position *para* d'une partie des groupements pentafluorophényle des unités monomériques du polymère de type PPFS, d'au moins une molécule comportant une ou plusieurs fonctions hydroxyles libres et une fonction thiol libre.

On désigne dans la suite du texte par « mecapto-alcool », une telle molécule comportant une ou plusieurs fonctions hydroxyles libres (soit un mono ou poly-alcool), de préférence une seule fonction hydroxyle libre (mono-alcool) et une fonction thiol libre.

Par fonction thiol libre, on entend une fonction -SH non protégée, et pouvant réagir par substitution nucléophile avec une fonction fluor dans les conditions décrites dans la suite du texte. Par fonction hydroxyle libre, on entend une fonction -OH non protégée.

De préférence, la fonctionnalisation met en œuvre un ou plusieurs mercapto-alcools comportant une seule fonction hydroxyle libre.

De préférence, le ou lesdits mercapto-alcools mis en œuvre pour la fonctionnalisation d'un polymère de type PPFS selon l'invention sont choisis parmi les mercapto-alcanols, en particulier de formule :

[Chem 4] HS-(CH₂)_{q}-CH₂-OH,

dans laquelle :
q vaut 0 ou est un entier compris entre 1 et 10, en particulier entre 3 et 7, de préférence vaut 5.

Le mercapto-alcool peut être par exemple choisi parmi le 4-mercaptobutan-1-ol, le 5-mercaptopentan-1-ol, le 6-mercaptohexan-1-ol et le 7-mercaptoheptan-1-ol. A titre d'exemple, le mercapto-alcool est le 6-mercaptohexan-1-ol.

Il est entendu que le procédé peut mettre en œuvre un ou plusieurs mercapto-alcools selon l'invention distincts. De préférence, le procédé de l'invention met en œuvre un unique mercapto-alcool, en particulier tel que décrit précédemment.

La fonctionnalisation du polymère de type PPFS par des fonctions hydroxyles pendantes est plus particulièrement opérée par substitution nucléophile entre la fonction thiol portée par le mercapto-alcool, en particulier tel que décrit précédemment, et l'atome de fluor en position *para* d'un groupement pentafluorophényle.

Cette réaction de substitution nucléophile est régiosélective, à savoir que seul l'atome de fluor en position *para* d'un groupe pentafluorophényle est substitué. Une telle réaction de substitution nucléophile entre un atome de fluor et une fonction thiol a par exemple été décrite pour le greffage d'un decanethiol perfluoré ou d'un acide mercapto-propanoïque ou mercapto-acétique sur un polymère de type PPFS [10,11].

La réaction de substitution nucléophile pour la fonctionnalisation du polymère de type PPFS est plus particulièrement réalisée en présence d'une base. Avantageusement, elle est réalisée en présence d'une base aprotique plus faible que l'hydrure de sodium (NaH), l'hydroxyde de sodium (NaOH) et l'hydroxyde de potassium (KOH), de préférence d'une base aprotique présentant un pKa strictement inférieur à 15 et strictement supérieur à 10, en particulier strictement inférieur à 14, plus particulièrement inférieur ou égal à 13 et strictement supérieur à 10, voire compris entre 10,2 et 13.

Avantageusement, la réaction de substitution nucléophile pour la fonctionnalisation du polymère de type PPFS est réalisée en présence d'une base choisie parmi le 1,8-diazabicyclo[5.4.0]undéc-7-ène (DBU, ou nom UICPA 2,3,4,6,7,8,9,10-octahydropyrimido[1,2-a]azépine), la triéthylamine (TEA) et le carbonate de potassium (K₂CO₃), en particulier choisie parmi le 1,8-diazabicyclo[5.4.0]undéc-7-ène (DBU) et la triéthylamine (TEA). De manière plus préférée, la base est le 1,8-diazabicyclo[5.4.0]undéc-7-ène (DBU).

En particulier, la base peut être mise en œuvre dans un rapport molaire base/mercapto-alcool compris entre 0,1 et 1.

La réaction de substitution pour la fonctionnalisation du polymère de type PPFS peut être plus particulièrement opérée en milieu solvant. Le milieu solvant permet de solubiliser le polymère de type PPFS et le mercapto-alcool. Il peut être formé d'un ou plusieurs solvant(s) polaire(s) aprotique(s), en particulier choisis parmi le tétrahydrofurane (THF), des amides telles que la N,N-diméthylacétamide (DMAc), la N,N-diméthylformamide (DMF), la N-méthyl-2-pyrrolidone (NMP) ; la méthyléthylcétone (MEK), la N-méthyl-2-pyrrolidone et leurs mélanges, de préférence de tétrahydrofurane (THF), de N,N-diméthylformamide (DMF) ou de méthyléthylcétone (MEK), plus préférentiellement de méthyléthylcétone (MEK).

La réaction de substitution peut être effectuée à une température comprise entre 10°C et 100°C, en particulier entre 15°C et 40°C, de préférence entre 20°C et 30°C, par exemple à température ambiante. La durée de réaction peut être comprise entre 1 heure et 16 heures, en particulier entre 6 heures et 16 heures.

De préférence, le milieu réactionnel est maintenu sous agitation pendant la réaction de substitution.

Le polymère obtenu à l'issue du greffage du mercapto-alcool sur le polymère de type PPFS est désigné dans la suite du texte sous l'appellation « macro-amorceur », en ce qu'il comporte des fonctions hydroxyle libres, pendantes, en position *para* d'une partie des groupements pentafluorophényle des unités monomériques, et destinées à amorcer la polymérisation par ouverture de cycle pour la formation des chaînes polymériques latérales en étape (iii).

Le taux de greffage des chaînes latérales polycarbonate/polyester du polymère peigne préparé selon le procédé de l'invention peut ainsi être contrôlé par le taux de greffage dudit mercapto-alcool au niveau du polymère de type PPFS en étape (ii) du procédé de l'invention. Le taux de greffage molaire est défini comme le pourcentage d'unités de répétition de la chaine principale de type PPFS porteuses d'un groupement ou d'une chaîne pendante. Le taux de greffage molaire, encore appelé taux de substitution, peut être caractérisé par résonance magnétique nucléaire (RMN) du fluor F¹⁹.

Le taux de greffage peut être plus particulièrement ajusté en faisant varier le rapport molaire entre le mercapto-alcool et les unités monomériques du polymère de type PPFS. En particulier, le ou lesdits mercapto-alcools et ledit polymère de type PPFS peuvent être mis en œuvre dans un rapport molaire mercapto-alcool(s)/ unités monomériques du polymère de type PPFS compris entre 0,05 et 0,5, notamment entre 0,1 et 0,5.

De préférence, le taux de greffage molaire obtenu en étape (ii) dudit mercapto-alcool au niveau du polymère de type PPFS est inférieur ou égal à 35 %, afin de permettre la solubilisation du polymère de type PPFS fonctionnalisé, servant de macro-amorceur, dans le milieu solvant mis en œuvre pour la polymérisation des chaînes latérales en étape (iii), en particulier tel que décrit ci-après. De manière avantageuse, le taux de greffage molaire peut ainsi être compris entre 1 % et 35 %, notamment entre 5 % et 35 %. En particulier, le taux de greffage peut être compris entre 10 % et 30 %.

Les fonctions hydroxyles libres du macro-amorceur issues du mercapto-alcool présentent avantageusement une bonne accessibilité pour amorcer la polymérisation des chaînes latérales par ouverture de cycle.

A l'issue de la réaction de substitution nucléophile, le polymère de type PPFS fonctionnalisé peut être récupéré par précipitation dans un solvant tel que le méthanol.

Dans un mode de réalisation particulier, les unités monomériques du polymère de type PPFS fonctionnalisé, obtenu à l'issue de l'étape (ii) du procédé de l'invention, répondent à la formule (II) suivante : 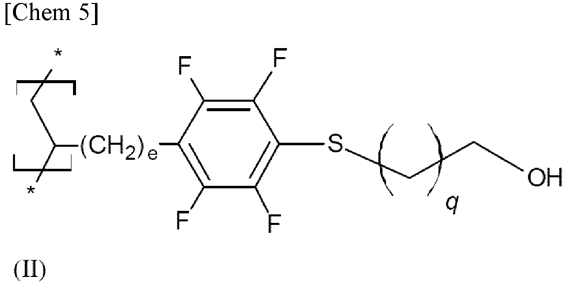 dans laquelle e et q sont tels que définis précédemment.

Dans un mode de réalisation préféré, le polymère de type PPFS fonctionnalisé résulte du greffage d'un unique mercapto-alcool au niveau du polymère de type PPFS.

Dans un mode de réalisation particulier, le polymère en peigne obtenu selon l'invention est de formule (III) : 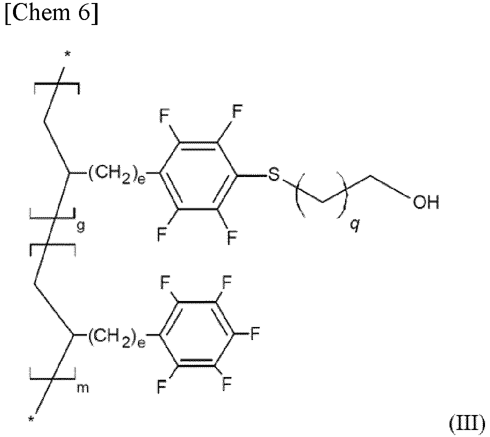
dans laquelle e et q sont tels que définis précédemment ;
g correspond au nombre moyen d'unités monomériques fonctionnalisées ;
m correspond au nombre moyen d'unités monomériques non fonctionnalisées ;
avec g/g+m représentant le taux de greffage molaire, étant en particulier compris entre 0,01 et 0,35, plus particulièrement entre 0,10 et 0,30 ;
l'ordre de succession des deux types d'unités monomériques formant le polymère de formule (III) étant totalement aléatoire.

### (iii) Obtention du polymère en peigne

Comme évoqué précédemment, le procédé de l'invention comprend en étape (iii) la formation des chaînes polycarbonate/polyester directement au niveau du polymère de type PPFS, par polymérisation à partir de monomères cycliques de cinq à huit chaînons choisis parmi les lactones et les carbonates cycliques.

Plus précisément, les fonctions hydroxyles pendantes du polymère de type PPFS fonctionnalisé à l'issue de l'étape (ii) permettent d'amorcer la polymérisation par ouverture de cycle des monomères.

Le ou les monomères cycliques à partir desquels sont formées les chaînes latérales du polymère en peigne répondent plus particulièrement à la formule (M2) suivante : 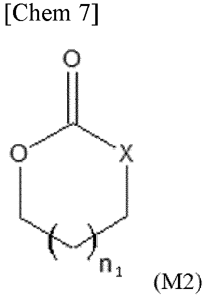 dans laquelle :
- X représente un atome de carbone ou un atome d'oxygène ;
- n₁ vaut 0 ou est un entier compris entre 1 et 3 ;
lesdits monomères étant éventuellement substitués, sur un ou plusieurs des atomes de carbone du cycle, par un ou plusieurs substituants R₁. Les substituants du monomère cyclique, R₁, peuvent être plus particulièrement choisis parmi des groupements alkyles, en particulier en C₁ à C₅, linéaires ou ramifiés.

Selon un mode de réalisation particulier, les chaînes latérales formées en étape (iii) sont des polycarbonates, autrement dit sont obtenues par polymérisation à partir de monomères de type carbonates cycliques de cinq à huit chaînons.

Les carbonates cycliques peuvent être plus particulièrement de formule (M3) suivante : 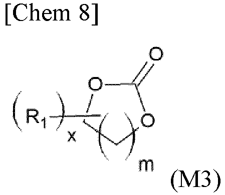
dans laquelle m étant un entier compris entre 1 et 3, de préférence m vaut 1 ou 2, plus préférentiellement m vaut 2 ;
x vaut 0 ou est un entier compris entre 1 et 2m+2 ; et R₁, porté(s) par un ou plusieurs atomes de carbone du cycle, représentent, indépendamment les uns des autres, des substituants, en particulier des groupements alkyles, en particulier en C₁ à C₅, linéaires ou ramifiés.

De préférence, x vaut 0.

A titre d'exemple de monomère carbonate cyclique, on peut citer le triméthylène carbonate et ses dérivés, en particulier le triméthylène carbonate.

Selon un autre mode de réalisation particulier, les chaînes latérales formées en étape (iii) sont des polyesters, autrement dit sont obtenues par polymérisation à partir de monomères de type lactone.

Par lactone, on entend plus particulièrement des monomères répondant à la formule (M4) suivante : 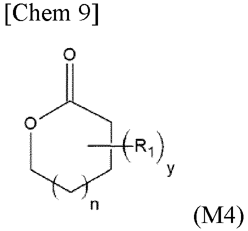
dans laquelle n est un entier allant de 1 à 3, en particulier n vaut 2 ;
y vaut 0 ou est un entier compris entre 1 et 2n+6 ; et R₁, porté(s) par un ou plusieurs atomes de carbone du cycle, représentent, indépendamment les uns des autres, des substituants, en particulier des groupements alkyles, en particulier en C₁ à C₅, linéaires ou ramifiés. En particulier, y vaut 0.

A titre d'exemple de monomère de type lactone, on peut citer l'ε-caprolactone.

Comme évoqué précédemment, les chaînes polymériques latérales formées en étape (iii) peuvent être des chaînes de type homopolymère ou copolymère.

De préférence, les chaînes polymériques latérales, de préférence de type homopolymère, sont formées à partir d'un ou plusieurs monomère(s) cyclique(s) choisi(s) parmi le triméthylène carbonate et la ε-caprolactone.

En particulier, les chaînes latérales formées en étape (iii) peuvent être des chaînes poly(triméthylène carbonate) (PTMC) ou des chaînes poly(ε-caprolactone) (PCL).

La synthèse de polyesters ou de polycarbonates par polymérisation par ouverture de cycle (ou ROP pour Ring-Opening Polymerization en terminologie anglo-saxonne) sous l'action d'un catalyseur et d'un amorceur comportant une fonction hydroxyle est bien connue. Plus particulièrement, la ROP par voie cationique ([12]-[14]) de PCL ou PTMC a été proposée, par exemple par Makiguchi [14] qui met en œuvre, à titre d'organo-catalyseur, le diphényl phosphate (DPP) et un amorceur de type phényl propanol et permet d'accéder à une polymérisation contrôlée, en particulier à un indice de polydispersité (IP) faible et à un bon contrôle de la masse molaire en fonction du rapport molaire initial monomère/amorceur. La polymérisation fait intervenir quasi-exclusivement le mécanisme de monomère activé, autrement dit, l'amorçage et la propagation de la polymérisation opèrent par réaction entre le monomère et une fonction hydroxyle porté par l'amorceur ou se trouvant en bout de chaîne se propageant. De fait, la nature des bouts de chaînes linéaires est contrôlée, l'un des bouts présentant une fonction hydroxyle et l'autre extrémité est dictée par la nature de l'amorceur, et donc, dans le cas d'un amorceur de type phényl propanol, présente un caractère non réactif. Le 1,1' binaphtyl 2,2' diyl hydrogen phosphate (BNPH) a également été proposé comme catalyseur, et présente une meilleure activité que le DPP [15].

Dans le cadre du procédé selon l'invention, c'est le polymère PPFS fonctionnalisé par les fonctions hydroxyles qui sert ainsi de macro-amorceur pour la formation par ROP des chaînes polycarbonate/polyester.

Les chaînes polycarbonates/polyesters du polymère en peigne formées en étape (iii) sont avantageusement obtenues par ROP d'un ou plusieurs monomères cycliques tels que décrits précédemment, par exemple du triméthylène carbonate ou de la ε-caprolactone, en présence du polymère de type PPFS fonctionnalisé à titre de macro-amorceur et d'un catalyseur, de préférence d'un organo-catalyseur.

En particulier, la réaction de polymérisation par ouverture de cycle en étape (iii) est opérée en présence d'un catalyseur, de préférence d'un catalyseur organique ou organo-catalyseur, tels que par exemple le diphényl phosphate (DPP) ou le 1,1' binaphtyl 2,2'diyl hydrogen phosphate (BNPH). Le catalyseur et le polymère de type PPFS fonctionnalisé sont de préférence mis en œuvre dans des proportions telles que le rapport molaire du catalyseur sur les fonctions hydroxyles pendantes du polymère de type PPFS fonctionnalisé est compris entre 0,5 et 5.

L'homme du métier est à même d'ajuster les conditions opératoires de la réaction de ROP. La réaction peut être conduite sous agitation en milieu solvant, par exemple dans un ou plusieurs solvants apolaires et aprotiques.

De préférence, la réaction de ROP est conduite dans un ou plusieurs solvants organiques aptes à solubiliser ledit polymère de type PPFS fonctionnalisé par les fonctions hydroxyles pendantes et le ou lesdits monomères cycliques. Par exemple, la réaction de ROP peut être conduite dans le dichlorométhane (DCM) ou le toluène, de préférence le dichlorométhane. De préférence, la concentration en monomère cyclique dans le ou lesdits solvants organiques est comprise entre 10 à 1000 g/L, en particulier entre 50 et 330 g/L.

La polymérisation peut être réalisée à une température comprise entre 10°C et 50°C, en particulier entre 15°C et 40°C, de préférence entre 20°C et 30°C, par exemple à température ambiante.

La durée de polymérisation peut être comprise entre 1 heure et 75 heures. Elle peut être adaptée en fonction de la nature du monomère cyclique et de la masse molaire des chaînes polymériques souhaitée.

Le polymère en peigne synthétisé peut être récupéré par précipitation dans un solvant tel que le méthanol.

De manière avantageuse, le procédé de l'invention permet un bon contrôle de la polymérisation des chaînes latérales polycarbonates/polyesters, en particulier de la masse molaire et de la polydispersité des chaînes polycarbonates/polyesters obtenues directement au niveau du polymère de type PPFS.

En particulier, la masse molaire des chaînes latérales obtenues peut être ajustée en faisant varier le rapport molaire entre les monomères cycliques et le nombre de fonctions hydroxyles pendantes, en particulier le nombre d'unités monomériques du polymère de type PPFS fonctionnalisées par une fonction hydroxyle pendante. Selon un mode de réalisation particulier, le ou lesdits monomères cyclique et le polymère de type PPFS fonctionnalisé sont mis en œuvre dans des proportions telles que le rapport molaire du ou desdits monomère(s) sur les fonctions hydroxyles pendantes du polymère de type PPFS fonctionnalisé est compris entre 10 et 100, de préférence entre 10 et 25.

De manière avantageuse, la polymérisation des chaînes latérales directement au niveau du polymère de type PPFS fonctionnalisé permet de faire varier très largement la longueur des chaînes de type polycarbonate/polyester greffées.

Ainsi, il est possible selon le procédé de l'invention de former des chaînes latérales polycarbonate/polyester de masse molaire moyenne en nombre allant de 800 g.mol⁻¹ à 10 000 g.mol⁻¹, en particulier de 800 à 5000 g.mol⁻¹.

En particulier, les chaînes latérales polycarbonate/polyester formées en étape (iii) du procédé de l'invention peuvent présenter une masse molaire moyenne en nombre inférieure ou égale à 2000 g.mol⁻¹, en particulier strictement inférieure à 2000 g.mol⁻¹, notamment comprise entre 800 g.mol⁻¹ et 2000 g.mol⁻¹ et plus particulièrement entre 800 g.mol⁻¹ et 1500 g.mol⁻¹. La masse moléculaire moyenne en nombre des chaînes latérales polycarbonate/polyester peut être déterminée par chromatographie d'exclusion stérique (CES). Elle peut encore être obtenue à partir de l'analyse RMN ¹H.

Avantageusement, les chaînes polycarbonates/polyesters obtenues présentent un faible indice de polydispersité, avantageusement strictement inférieur à 1,2, de préférence compris entre 1 et 1,1. L'indice de polydispersité, noté IP, est égal au rapport de la masse molaire moyenne en poids Mw sur la masse molaire moyenne en nombre Mn.

### Polymère peigne

A l'issue de l'étape (iii) du procédé de l'invention, le polymère de type PPFS présente ainsi des chaînes polycarbonates/polyesters liées en position *para* d'une partie des groupements pentafluorophényle par l'intermédiaire de liaisons thioéther, provenant de la fonctionnalisation en étape (ii) du polymère de type PPFS avec le ou lesdits mercapto-alcools.

### Purification du polymère peigne

Le polymère en peigne obtenu à l'issue de la formation en étape (iii) des chaînes latérales polycarbonate/polyester peut être soumis à une ou plusieurs étapes ultérieures de purification.

Avantageusement, la purification du polymère peigne selon l'invention peut être opérée en précipitant le polymère en peigne solubilisé dans un solvant organique, dans un mélange d'un premier solvant choisi parmi le méthanol, l'éthanol, le diéthyl éther et leurs mélanges et d'un deuxième solvant choisi parmi le dichlorométhane (DCM), l'acétone, le tétrahydrofurane (THF), la méthyléthylcétone (MEK), la N,N-diméthylformamide (DMF) et leurs mélanges, séparation liquide/solide, par exemple une filtration, et séchage (évaporation des solvants).

En particulier, ledit premier solvant et ledit deuxième solvant sont miscibles.

Le solvant de solubilisation du polymère peigne peut être par exemple du dichlorométhane (DCM), de l'acétone, du tétrahydrofurane (THF), de la méthyléthylcétone (MEK), de la N,N-diméthylformamide (DMF) ou leurs mélanges, en particulier du dichlorométhane. De préférence, le polymère est précipité dans un mélange d'acétone et de méthanol, l'homme du métier étant à même d'ajuster le rapport volumique acétone/méthanol. En particulier, le rapport volumique acétone/méthanol peut être compris entre 20/80 et 90/10, plus particulièrement entre 40/60 et 80/20, notamment entre 50/50 et 70/30, voire entre 55/45 et 65/35.

De façon surprenante, comme illustré en exemples, les inventeurs ont montré qu'un tel protocole de purification permet avantageusement d'éliminer des chaînes de polycarbonates/polyesters non greffées, c'est-à-dire non liées au polymère de type PPFS.

Dans un mode de réalisation particulier, la purification peut être opérée à partir du milieu réactionnel obtenu à l'issue de la formation des chaînes polymérique latérales, comprenant ledit polymère en peigne dans le ou lesdits solvants mis en œuvre pour la polymérisation des chaînes polycarbonates/polyesters, en particulier dans le dichlorométhane. En particulier, notamment dans le cadre de l'élimination de chaînes polycarbonate/polyester non greffées de faible masse moléculaire, la purification peut être opérée à partir du milieu réactionnel obtenu à l'issue de l'étape (iii), par précipitation dudit polymère en peigne dans du méthanol. Dans un autre mode particulièrement préféré, la purification peut être opérée à partir du polymère en peigne récupéré à l'issue de la formation des chaînes latérales en étape (iii), par solubilisation dudit polymère en peigne dans un solvant organique, par exemple dans du dichlorométhane (DCM), de l'acétone, du tétrahydrofurane (THF), de la méthyléthylcétone (MEK), de la N,N-diméthylformamide (DMF) ou leurs mélanges, en particulier du dichlorométhane, puis par précipitation dans un mélange d'un premier solvant choisi parmi le méthanol, l'éthanol, le diéthyl éther et leurs mélanges et d'un deuxième solvant choisi parmi le DCM, l'acétone, le THF, la MEK, la DMF et leurs mélanges, en particulier dans un mélange acétone/méthanol, suivie d'une séparation liquide/solide, par exemple une filtration, et d'un séchage (évaporation des solvants).

De préférence, la purification est opérée à partir du polymère en peigne récupéré à l'issue de la formation des chaînes latérales en étape (iii), par solubilisation dudit polymère en peigne dans du dichlorométhane (DCM), puis par précipitation dans un mélange acétone/méthanol, en particulier tel que décrit précédemment, suivie d'une séparation liquide/solide, par exemple une filtration, et d'un séchage (évaporation des solvants).

### Protection des bouts de chaînes hydroxyles du polymère en peigne

Dans un mode de réalisation particulier, les fonctions hydroxyles présentes aux extrémités des chaînes polycarbonate/polyester latérales du polymère peigne peuvent se présenter sous forme protégée (ou « coiffée »).

Le procédé de préparation d'un polymère en peigne selon l'invention peut ainsi comprendre en outre une étape de protection des fonctions hydroxyles présentes aux extrémités des chaînes polycarbonates/polyesters latérales dudit polymère peigne, par réaction avec au moins un composé, dit agent de protection, en particulier tel que décrit dans la suite du texte. La protection des fonctions hydroxyles peut être opérée à l'issue de la synthèse du polymère peigne, de préférence après purification comme décrit ci-dessus.

La formation d'extrémités hydroxyles coiffées (plus généralement désignées sous l'appellation « end-capped » en terminologie anglo-saxonne) permet avantageusement d'accroître la stabilité électrochimique de l'électrolyte solide formé à partir du ou desdits polymères peignes, les fonctions terminales hydroxyle étant sensibles à la réduction et à l'oxydation, et susceptibles de se dégrader au contact des sels de lithium.

Une fonction hydroxyle est plus particulièrement protégée en formant une fonction plus stable chimiquement et électrochimiquement. Par exemple, la protection des fonctions hydroxyles peut être plus particulièrement réalisée par réaction de ladite fonction hydroxyle en bout de chaîne avec au moins un composé, dit agent de protection, choisi parmi les chlorures d'acyle, par exemple le chlorure de benzoyle, le chlorure d'acétyle, etc. ; les anhydrides d'acide par exemple l'anhydride acétique, etc., et les isocyanates comme l'isocyanate de p-toluènesulfonyle, etc.

La protection des fonctions hydroxyles peut être réalisée en ajoutant directement le ou lesdits agents de protection dans le milieu réactionnel obtenu à l'issue de la synthèse du polymère peigne en étape (iii) ou ultérieurement à une étape de purification telle que décrite précédemment, du polymère peigne.

L'homme du métier est à même d'ajuster les conditions opératoires pour accéder à la protection de la ou des fonctions hydroxyles des extrémités des chaînes latérales du polymère peigne selon l'invention.

L'invention se rapporte ainsi à un polymère en peigne, en particulier tel qu'obtenu à l'issue du procédé de l'invention décrit précédemment, comprenant une chaîne principale de type PPFS formée à partir de monomères 1-éthényl- et/ou 1-allyl- 2,3,4,5,6-pentafluorobenzène, une partie des unités monomériques de la chaîne principale étant porteuse de chaînes latérales polymériques, dites chaînes polycarbonates/polyesters, formées à partir d'au moins un monomère cyclique de cinq à huit chaînons choisi parmi des lactones et les carbonates cycliques ; lesdites chaînes polymériques latérales étant greffées *en para* des groupes pentafluorophényle par l'intermédiaire de liaisons thioéther.

Les caractéristiques décrites précédemment dans le cadre du procédé de préparation du polymère peigne, en particulier pour le polymère de type PPFS formant la chaîne principale du polymère peigne et pour les chaînes polyester/polycarbonate du polymère peigne préparé selon l'invention, s'appliquent également au polymère peigne selon l'invention.

En particulier, le polymère peigne selon l'invention possède de préférence une chaîne principale de type PPFS présentant une masse molaire moyenne en nombre Mₙ supérieure ou égale à 10 000 g.mol⁻¹, en particulier inférieure ou égale à 1 000 000 g.mol⁻¹, notamment inférieure ou égale à 600 000 g.mol⁻¹ et plus particulièrement comprise entre 40 000 g.mol⁻¹ et 400 000 g.mol⁻¹, notamment comprise entre 50 000 g.mol⁻¹ et 100 000 g.mol⁻¹.

Les chaînes latérales de type polycarbonate/polyester peuvent présenter une masse molaire moyenne en nombre allant de 800 g.mol⁻¹ à 10 000 g.mol⁻¹, en particulier de 800 g.mol⁻¹ à 5 000 g.mol⁻¹. Avantageusement, la masse molaire moyenne en nombre des chaînes latérales de type polycarbonate/polyester peut être inférieure ou égale à 2000 g.mol⁻¹, en particulier strictement inférieure à 2000 g.mol⁻¹, en particulier être comprise entre 800 g.mol⁻¹ et 2000 g.mol⁻¹ et plus particulièrement entre 800 g.mol⁻¹ et 1500 g.mol⁻¹.

Comme indiqué précédemment, compte-tenu de leur mode de polymérisation, les chaînes latérales présentent avantageusement une faible polydispersité. En particulier, l'indice de polydispersité, rapport de la masse molaire moyenne en poids Mw sur la masse molaire moyenne en nombre Mn, est strictement inférieur à 1,2.

Le taux de greffage molaire des chaînes latérales de type polycarbonate/polyester peut être inférieur ou égal à 35 %, et en particulier supérieur ou égal à 1 %, notamment compris entre 5 % et 33 % et plus particulièrement entre 10 % et 30 %.

Les chaînes latérales de type polycarbonate/polyester présentent de préférence des fonctions hydroxyles en extrémité de chaîne, sous forme protégée ou coiffée, résultant de la réaction de ladite fonction hydroxyle avec un agent de protection, comme décrit précédemment.

Dans un mode de réalisation particulier, les unités monomériques du polymère peigne selon l'invention porteuses d'une chaîne latérale, en particulier obtenu selon le procédé décrit précédemment, peuvent ainsi être de formule (IV) suivante : 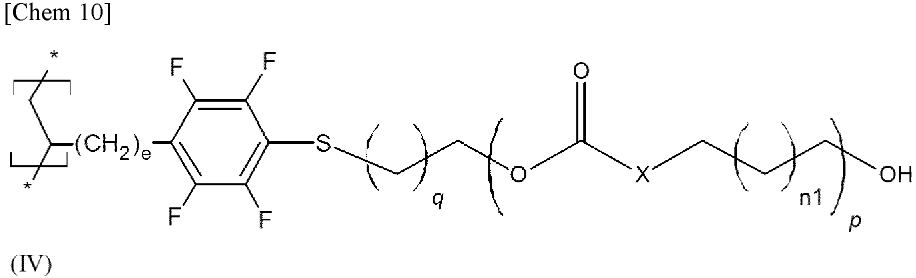 dans laquelle e, q, X et n₁ sont tels que définis précédemment ; p représente le nombre d'unités monomériques de la chaîne latérale (correspondant au degré de polymérisation), en particulier p est supérieur ou égal à 4, en particulier compris entre 5 et 500, plus particulièrement entre 5 et 100, notamment strictement inférieur à 20, voire compris entre 7 et 15, ladite fonction hydroxyle en bout de chaîne pouvant être éventuellement sous forme protégée, par exemple sous la forme -OAc (Ac représentant un groupe acétyle).

Il est entendu que X et n₁ peuvent être identiques ou différents pour les p unités monomériques de la chaîne latérale, la chaîne latérale pouvant ainsi être un homopolymère de type polycarbonate, par exemple un PTMC, un homopolymère de type polyester, par exemple un poly(caprolactone) ou encore un copolymère formé à partir d'un ou plusieurs monomères cycliques distincts choisis parmi les lactones et les carbonates cycliques. De préférence, X et n₁ sont identiques pour les p unités monomériques de la chaîne latérale.

Dans un mode de réalisation particulier, les unités monomériques du polymère peigne selon l'invention porteuses d'une chaîne latérale, en particulier obtenu selon le procédé décrit précédemment, peuvent ainsi être de formule (IV-a) suivante : 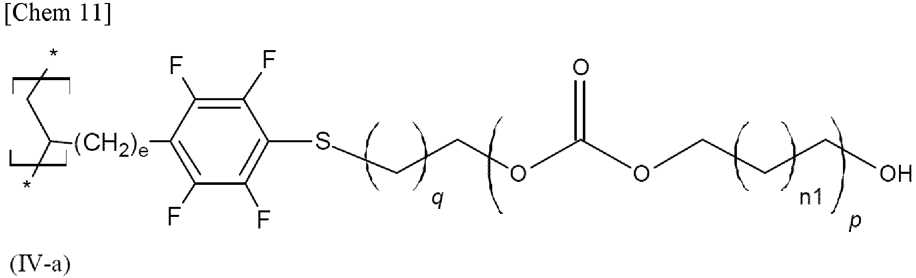 dans laquelle e, q, n₁ et p sont tels que définis précédemment, ladite fonction hydroxyle en bout de chaîne pouvant être éventuellement sous forme protégée, par exemple sous la forme -OAc.

Dans un autre mode de réalisation particulier, les unités monomériques du polymère peigne selon l'invention porteuses d'une chaîne latérale, en particulier obtenu selon le procédé décrit précédemment, peuvent ainsi être de formule (IV-b) suivante : 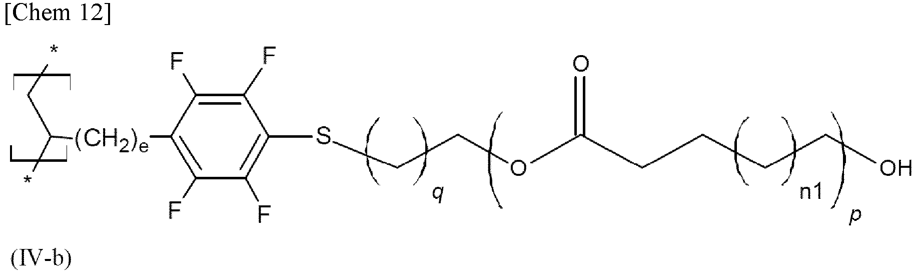 dans laquelle e, q, n₁ et p sont tels que définis précédemment, ladite fonction hydroxyle en bout de chaîne pouvant être éventuellement sous forme protégée, par exemple sous la forme -OAc.

Selon un mode de réalisation particulier, les chaînes latérales d'un polymère peigne selon l'invention, en particulier obtenu par le procédé selon l'invention, sont des chaînes de poly(triméthylène carbonate), lesdites chaînes étant liées à la chaîne principale de type PPFS par l'intermédiaire d'un groupement thioéther et présentant de préférence des fonctions hydroxyles en extrémité de chaîne sous forme protégée, par exemple sous la forme -OAc. Selon un autre mode de réalisation particulier, les chaînes latérales d'un polymère peigne selon l'invention, en particulier obtenu par le procédé selon l'invention, sont des chaînes de poly(ε-caprolactone), lesdites chaînes étant liées à la chaîne principale de type PPFS par l'intermédiaire d'un groupement thioéther et présentant de préférence des fonctions hydroxyles en extrémité de chaîne sous forme protégée, par exemple sous la forme -OAc.

Dans un mode de réalisation particulier, le polymère en peigne obtenu selon l'invention est de formule (V) : 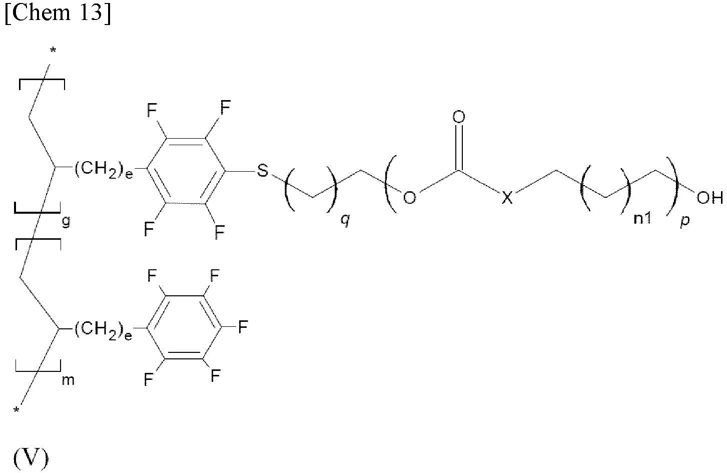
dans laquelle e, p, q, n₁ et X sont tels que définis précédemment ;
lesdites fonctions hydroxyles aux extrémités des chaînes latérales étant éventuellement protégées, comme décrit précédemment ;
g correspond au nombre moyen d'unités monomériques porteuses de chaînes latérales polymériques ;
m correspond au nombre moyen d'unités monomériques non greffées ;
avec g/g+m représentant le taux de greffage molaire en chaînes latérales polymériques, étant en particulier inférieur ou égal à 0,35, en particulier compris entre 0,01 et 0,35, par exemple entre 0,05 et 0,35, notamment strictement inférieur à 0,35, plus particulièrement compris entre 0,10 et 0,30 ;
l'ordre de succession des deux types d'unités monomériques formant le polymère de formule (V) étant totalement aléatoire.

### PREPARATION DE L'ELECTROLYTE SOLIDE

Comme évoqué précédemment, les polymères en peigne selon l'invention, en particulier obtenus par le procédé selon l'invention, de préférence après protection des fonctions hydroxyles aux extrémités des chaînes polycarbonates/polyester latérales, peuvent être mis en œuvre, en combinaison avec au moins un sel ionique, pour former un électrolyte solide, en particulier dans un système électrochimique, notamment dans une batterie au lithium.

L'électrolyte solide peut être un électrolyte polymérique solide (dit encore SPE pour « Solid Polymeric Electrolyte » en terminologie anglo-saxonne) ou un électrolyte solide hybride (HSE pour « Hybrid Solid Electrolyte » en terminologie anglo-saxonne).

L'électrolyte formé selon l'invention peut se présenter sous toute forme appropriée, en particulier sous forme d'un film ou d'une membrane.

En particulier, le réseau polymérique formé des polymères en peigne selon l'invention, en particulier obtenus par le procédé selon l'invention, forme plus de 50 % massique, en particulier plus de 75 % massique, de la masse totale dudit électrolyte solide.

De manière avantageuse, le film d'électrolyte polymérique solide selon l'invention est exempt d'agents plastifiants, tels que des carbonates, par exemple le carbonate d'éthylène ou le carbonate de diéthyle.

En particulier, le film d'électrolyte solide selon l'invention est distinct d'un électrolyte de type gélifié, comprenant une quantité majoritaire de plastifiant.

La préparation d'un électrolyte solide à partir des polymères en peigne selon l'invention met plus particulièrement en œuvre au moins les étapes suivantes :
(a) mélange, en présence ou non d'un milieu solvant, d'au moins :
   - un ou plusieurs polymères en peigne selon l'invention, tel que décrits précédemment, en particulier obtenus par le procédé selon l'invention,
   - au moins un sel de métal alcalin ou alcalino-terreux, en particulier un sel de lithium ; et
   - éventuellement, notamment dans le cas de la préparation d'un HSE, au moins une charge inorganique ;
(b) formation, en particulier en surface d'un substrat, d'un électrolyte solide à partir dudit mélange.

Le sel de métal alcalin ou alcalino-terreux est mis en œuvre avec le polymère en peigne selon l'invention pour assurer la conduction des ions.

Dans le cadre de l'invention, on entend par :
- « métaux alcalins », les éléments chimiques de la première colonne du tableau périodique des éléments, et plus particulièrement choisis parmi le lithium, le sodium, le potassium, le rubidium, le césium. De préférence, le métal alcalin est le lithium, le sodium ou le potassium, et plus préférentiellement le lithium ;
- « métaux alcalino-terreux », les éléments chimiques de la deuxième colonne du tableau périodique des éléments, et plus particulièrement choisis parmi le béryllium, le magnésium, le calcium, le strontium, le baryum, le radium. De préférence, le métal alcalino-terreux est le magnésium ou le calcium.

Le sel d'un métal alcalin peut être par exemple un sel de lithium ou un sel de sodium ; le sel d'un métal alcalinoterreux peut être par exemple un sel de magnésium.

A titre d'exemples de sel de lithium, on peut citer le LiPF₆, LiClO₄, LiBF₄, LiAsF₆, LiCF₃SO₃, LiN(C₂F₅SO₂)₂, le bistrifluorométhylsulfonylimide de lithium LiN[SO₂CF₃]₂ (connu sous l'abréviation LiTFSI), le bis(fluorosulfonyl)amidure de lithium (connu sous l'abréviation LiFSI) LiN[SO₂F]₂, le lithium 4,5-dicyano-2-(trifluoromethyl)imidazole (connu sous l'abréviation LiTDI), le lithium bispentafluoroéthylsulfonylimide (connu sous l'abréviation LiBETI), le lithium bis(oxalato)borate (connu sous l'abréviation LiBOB) et le lithium difluoro(oxalato)borate (connu sous l'abréviation LiFOB) et les mélanges de ceux-ci.

De préférence, l'électrolyte comporte, comme sel de lithium, du LiTFSI ou LiFSI, de préférence du LiTFSI.

Il appartient à l'homme du métier d'ajuster la quantité en sels de métal alcalin ou alcalino-terreux, notamment au regard de la nature du polymère en peigne, et notamment de la nature des chaînes polycarbonates/polyesters latérales portées par le polymère en peigne, mis en œuvre selon l'invention.

Selon un mode de réalisation particulier, les quantités en polymère(s) peigne et en sel(s) de lithium sont ajustées de sorte que le ratio molaire entre les groupes carbonyle des chaînes latérales polycarbonates/polyesters (autrement dit des groupes CO₃ dans le cas de chaînes polycarbonates, et des groupes CO₂ dans le cas de chaînes polyesters) par rapport au lithium, noté [CO]/[Li⁺], soit compris entre 0,1 et 30, en particulier entre 0,5 et 20 et plus particulièrement entre 5 et 15.

Selon une première variante de réalisation, le ou lesdits polymères en peigne selon l'invention sont mis en œuvre pour former un électrolyte polymérique solide (SPE), la préparation dudit électrolyte comprenant le mélange d'au moins un polymère en peigne selon l'invention et dont les fonctions hydroxyles terminales sont éventuellement protégées, et d'au moins un sel de métal alcalin ou alcalino-terreux, par exemple d'un sel de lithium.

Selon une autre variante de réalisation, le ou lesdits polymères en peigne selon l'invention sont mis en œuvre pour former un électrolyte solide hybride (HSE), la préparation dudit électrolyte comprenant alors le mélange d'au moins un polymère en peigne selon l'invention et dont les fonctions hydroxyles terminales sont protégées, d'au moins un sel de métal alcalin ou alcalino-terreux, par exemple d'un sel de lithium et, en outre, d'au moins une charge inorganique.

Les charges inorganiques peuvent être choisies parmi des charges inorganiques conductrice du ou des cations alcalin ou alcalino-terreux, en particulier conductrice d'ions lithium, des charges non conductrices du ou des cations alcalin ou alcalino-terreux, et leurs mélanges.

Les charges conductrices d'ions lithium peuvent être par exemple choisies parmi les oxydes lithiés, tels que Li₇La₃Zr₂O₁₂ (LLZO) et Li_{0.33}La_{0.56}TiO₃ (LLTO), Li_{1.3}Al_{0.3}Ti_{1.7}(PO₄)₃ (LATP), etc.

Il peut encore s'agir de charges choisies parmi :
- les grenats, par exemple choisis parmi le Li₇La₃Zr₂O₁₂, le Li₆La₂BaTa₂O₁₂, etc. ;
- les phosphates lithiés, par exemple choisis parmi le Li₃PO₄, le LiPO₃, etc. ;
- les borates lithiés, par exemple choisi parmi le Li₃BO₃, etc. ;
- les oxynitrures, par exemple choisis parmi Li₃PO₄₋ₓN_{2x/3}, Li₄SiO₄₋ₓN_{2x/3}, Li₄GeO₄₋ₓN_{2x/3} avec 0<x<4 ou Li₃BO₃₋ₓN_{2x/3} avec 0<x<3 ;
- les composés lithiés à base d'oxynitrure de lithium et de phosphore (appelés LiPON) ;
- les silicates, par exemple Li₂Si₂O₅ ;
- les sulfurés, par exemple l'argyrodite.

Les charges non conductrices de cations alcalin ou alcalino-terreux peuvent par exemple être choisies parmi l'alumine (Al₂O₃), la silice (SiO₂), le dioxyde de titane (TiO₂) etc.

La ou lesdites charges inorganiques peuvent être mises en œuvre dans un rapport volumique charge(s)/polymère(s) peigne compris entre 1/99 et 80/20, en particulier entre 20/80 et 80/20, plus particulièrement entre 20/80 et 60/40.

Le mélange du ou desdits polymères en peigne selon l'invention, du ou desdits sels de métal alcalin ou alcalino-terreux et, éventuellement, de la ou desdits charges inorganiques, est plus particulièrement opéré dans des conditions permettant une bonne dispersion desdits sels de métal alcalin ou alcalino-terreux et, éventuellement, de la ou desdits charges inorganiques, au niveau des polymères en peigne selon l'invention. Le mélange peut être opéré en présence ou non d'un solvant.

La préparation d'un film d'électrolyte solide selon l'invention peut ainsi être opérée soit par la voie utilisant un milieu solvant (dite « voie solvant »), soit par la voie mettant en œuvre le polymère à l'état fondu, en l'absence de solvant (dite « voie sèche » ou « voie fondue »). Selon une première variante de réalisation, le film d'électrolyte solide est préparé par voie « solvant ». Dans le cadre de cette variante, le mélange du ou desdits polymères en peigne selon l'invention, du ou desdits sels de métal alcalin ou alcalino-terreux et, éventuellement, de la ou desdits charges inorganiques, est plus particulièrement réalisé dans un milieu solvant. Le milieu solvant peut être formé d'un ou plusieurs solvants organiques polaires. A titre d'exemples, ils peuvent être choisis parmi l'acétone, le tétrahydrofurane (THF), l'acétonitrile et leurs mélanges.

De préférence, le mélange est chauffé à une température inférieure à 100°C. En particulier, le mélange est opéré à une température supérieure ou égale à 25 °C, en particulier comprise entre 40 et 60 °C.

L'électrolyte solide peut être formé par dépôt dudit mélange en surface d'un substrat, par exemple par enduction, suivi de l'évaporation du ou desdits solvants, en particulier pour obtenir un électrolyte ou film « sec ».

En particulier, le ou lesdits solvants peuvent être évaporés sous vide à une température comprise entre 70°C et 90°C, notamment d'environ 80°C.

Par « sec », on entend signifier que l'électrolyte solide ou film d'électrolyte solide comprend moins de 0,1 % massique de solvant, en particulier moins de 0,05 % massique et plus particulièrement moins de 0,02 % massique de solvant.

Selon une autre variante de réalisation, l'électrolyte solide, en particulier sous la forme d'un film, est préparé en l'absence de solvant, par voie « fondue », notamment par extrusion.

Dans le cadre de cette variante de réalisation, le mélange à l'état fondu peut être plus particulièrement opéré par chauffage à une température supérieure à Tg + 30°C, où Tg est la température de transition vitreuse du polymère en peigne. En particulier, le mélange est opéré à une température supérieure ou égale à 0 °C, en particulier comprise entre 20°C et 80 °C.

Le mélange à l'état fondu peut ensuite être mis sous la forme d'un film, supporté par un substrat ou autosupporté, par toute technique d'extrusion par voie fondue connue de l'homme du métier.

Comme évoqué précédemment, l'électrolyte solide peut être préparé sous la forme d'un film ou d'une membrane d'électrolyte directement en surface d'un substrat adapté, en particulier inerte.

Le substrat peut être de diverses natures. Il peut être en verre, en alumine, en silicone, en polyimide, en polytétrafluoroéthylène (PTFE), en polytéréphtalate d'éthylène (PET), en silicone, en polypropylène ou encore en acier inoxydable.

Le film d'électrolyte solide peut être éventuellement désolidarisé du substrat pour être mis en œuvre au niveau du système électrochimique auquel il est destiné, en particulier transféré sur au moins une électrode.

Le film d'électrolyte solide peut présenter par exemple une épaisseur comprise entre 20 et 500 µm, en particulier entre 20 et 100 µm et plus particulièrement entre 40 et 60 µm.

### SYSTEME ELECTROCHIMIQUE

L'électrolyte solide obtenu selon l'invention, notamment de type SPE ou HSE, peut être avantageusement mis en œuvre comme électrolyte solide dans un système électrochimique. L'invention concerne encore, selon un autre de ses aspects, un système électrochimique comprenant un électrolyte solide, en particulier un film d'électrolyte solide selon l'invention, en particulier faisant office à la fois de conducteur ionique et séparateur entre les électrodes positive et négative.

Le système électrochimique peut être un système générateur, convertisseur ou de stockage électrochimique. Il peut s'agir plus particulièrement d'une pile à combustible, par exemple une batterie primaire ou secondaire, par exemple une batterie au lithium, sodium, magnésium, potassium ou calcium ; d'une batterie à flux (« redox flow battery » en terminologie anglo-saxonne) ; d'un accumulateur lithium-air, lithium-soufre.

Selon un mode de réalisation particulier, l'électrolyte solide est mis en œuvre dans une batterie rechargeable, en particulier dans une batterie au lithium, notamment une batterie lithium-ion ou lithium-métal.

L'électrolyte solide selon l'invention peut être plus particulièrement mis en œuvre comme électrolyte séparateur au sein d'un système électrochimique. On entend par « électrolyte séparateur », un film d'électrolyte solide positionné entre les électrodes positive et négative d'un système électrochimique, et agissant à la fois comme conducteur ionique et séparateur entre les électrodes positive et négative.

En particulier, l'invention concerne encore, selon un autre de ses aspects, un ensemble électrode/membrane électrolytique, comprenant une membrane d'électrolyte solide selon l'invention.

Un système électrochimique selon l'invention comporte, d'une manière générale, au moins une électrode positive et une électrode négative entre lesquelles se trouve un film d'électrolyte solide agissant à la fois comme conducteur ionique et séparateur entre les électrodes positive et négative.

L'électrode positive d'une batterie au lithium comprend généralement, en tant que matière électrochimiquement active, des composés lamellaires, tels que LiCoO₂, LiNiO₂ et mixtes Li(Ni, Co, Mn, Al)O₂, ou des composés de structure spinelle de compositions proches de LiMn₂O₄, des phosphates du lithium, en particulier LiMnFePO₄ ou LiFePO₄.

De manière avantageuse, l'électrode positive comprend, en tant que matière électrochimiquement active, du LiNi_{1/3}Mn_{1/3}Co_{1/3}O₂ (cathodes NCM) ou du LiCoO₂, de préférence du LiNi_{1/3}Mn_{1/3}Co_{1/3}O₂.

L'électrode négative comprend généralement, en tant que matière électrochimiquement active, du lithium métal ou alliage à base de lithium dans le cas des accumulateurs primaires, ou des matériaux d'intercalation tels que le carbone graphite, ou de l'oxyde de titane lithié (Li₄Ti₅O₁₂) ou de l'oxyde de titane et de niobium (TiNb₂O₇), dans le cas des accumulateurs basés sur la technologie lithium-ion.

De manière avantageuse, il peut s'agir d'une batterie lithium-métal, comprenant une électrode en lithium métallique Li⁰ et une électrode comprenant du LiNi_{1/3}Mn_{1/3}Co_{1/3}O₂ ou du LiCoO₂, de préférence du LiNi_{1/3}Mn_{1/3}Co_{1/3}O₂.

L'invention va maintenant être décrite au moyen des exemples et figures suivants, donnés bien entendu à titre illustratif et non limitatif de l'invention.

### Exemple 1

### Préparation d'un poly(2,3,4,5,6-pentafluorostyrène) (PPFS) destiné à former la chaîne principale d'un polymère peigne selon l'invention

### 1.1 Synthèse d'un PPFS par polymérisation en masse sous catalyse Ziegler Natta ("PPFS-03")

### Préparation d'une solution de catalyseur Ziegler Natta :

Dans une boîte à gants, 1,2 mL de TiCl₄ (1 équivalent) et 15 mL de toluène anhydre sont ajoutés à un ballon bicol de 100 mL, surmonté d'une ampoule de coulée. 1,9 mL d'AlEt₃ (1,2 équivalent) et 15 mL de toluène sont ajoutés dans l'ampoule d'addition. Le montage est sorti de la boîte à gants et le fond du ballon bicol est plongé dans un bain de glace ; la solution d'AlEt₃ est ajoutée goutte à goutte à la solution de TiCl₄ sous agitation vigoureuse. Le bain de glace est retiré à la fin de l'ajout et le milieu réactionnel est maintenu sous agitation pendant 30 min à température ambiante. La solution de catalyseur Ziegler Natta est prête à l'emploi.

### Polymérisation du PPFS :

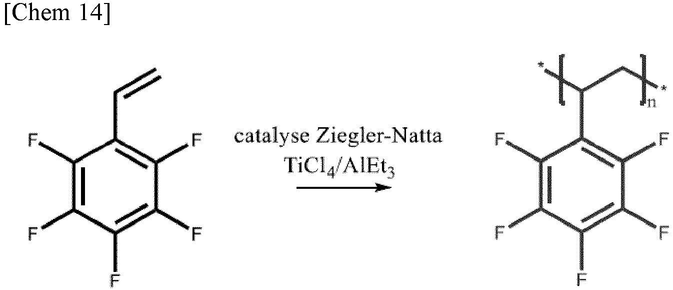

75 mL de 2,3,4,5,6-pentafluorostyrène (PFS ; 50 équivalents) sont introduits dans un ballon bicol de 500 mL. Le montage est mis sous flux d'Argon. 25 mL de solution de catalyseur Ziegler Natta sont ajoutés dans le ballon bicol. Le milieu réactionnel est mis sous agitation et chauffé à 70°C 4 h, puis à 120°C pendant 36h. En fin de polymérisation, un solide noir est obtenu dans le fond du ballon.

Le solide est solubilisé dans du fluorobenzène puis le poly(2,3,4,5,6-pentafluorostyrène) (PPFS) synthétisé est purifié par précipitation dans le MeOH. Après filtration, le PPFS (poudre blanche) est séché sous vide à 60°C pendant 48h.

69,8 g de PPFS, nommé "PPFS-03", sont obtenus avec un rendement massique d'environ 93%.

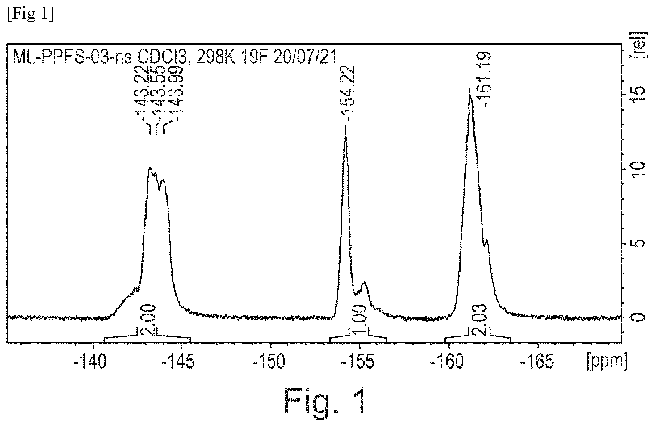

Le polymère obtenu est caractérisé par résonance magnétique nucléaire (RMN) de ¹H et ¹⁹F (figure 1) :
RMN ¹⁹F (400 MHz ; CDCl₃; 298 K) : δ ppm : -143ppm (m, 2F *orto*) ; -154ppm (s, 1F *para*) ; -161ppm (s, *meta*).

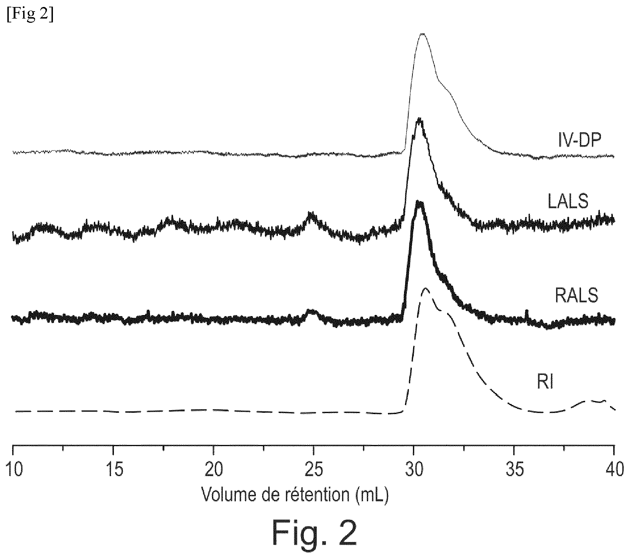

La masse molaire moyenne en nombre Mn déterminée par Chromatographie d'Exclusion Stérique (CES (THF, 30°C, calibration TDS)) (figure 2) est de 53 kg/mol avec un indice de polydispersité, IP = M_{w}/Mₙ, de 2,2.

### 1.2 Synthèse d'un PPFS par polymérisation radicalaire par émulsion ("PPFS-Em-01")

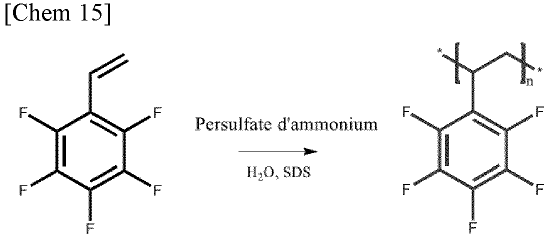

30 mL d'eau distillée et 0,3 g de SDS (dodécylsulfate de sodium, 2% en masse du PFS) sont introduits dans un mini-réacteur. Le milieu est mis sous agitation et chauffé à 75°C pendant 30 min. 15 g de PFS sont introduits dans le réacteur. 15 min après l'ajout, 0,17 g de persulfate d'ammonium (1,1% en masse du PFS), solubilisé dans 15 mL d'eau distillée, sont ajoutés au mini-réacteur. Le milieu est gardé sous agitation et chauffé à 75°C pendant 3h puis à 85°C pendant 1h. Un latex blanc est obtenu.

Le latex est précipité dans l'éthanol puis filtré. Le produit est séché à 60°C sous vide pendant 48h.
10,8 g de PPFS, nommé PPFS-Em-01, sont obtenus avec un rendement massique d'environ 72%.

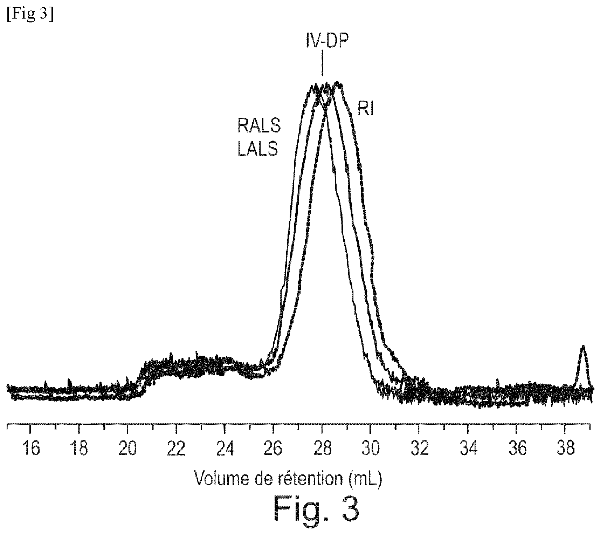

La masse molaire moyenne en nombre Mn déterminée par CES (THF, 30°C, calibration TDS) (figure 3) est de280 kg/mol avec un indice de polydispersité, IP = M_{w}/Mₙ, de 1,9.

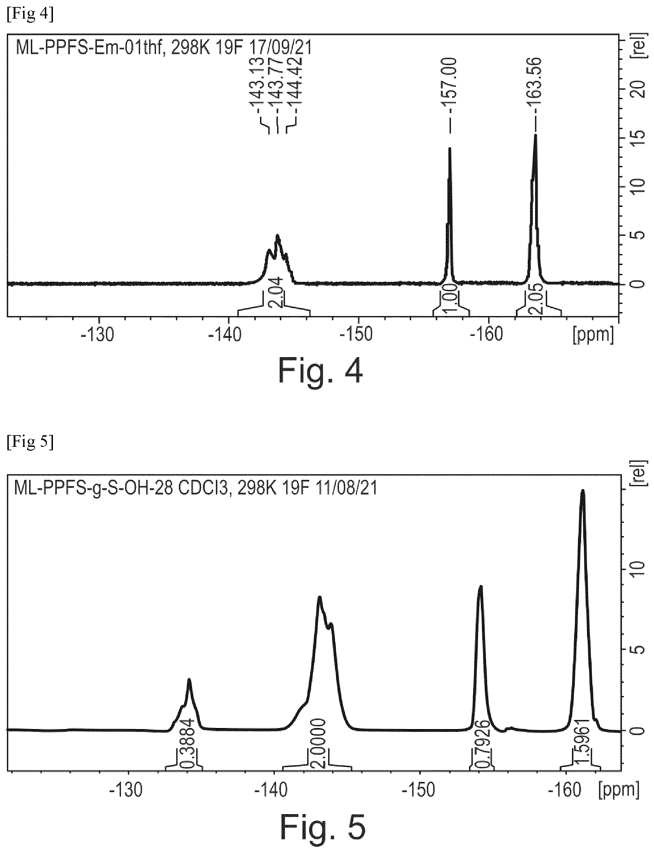

Le polymère est également caractérisé par résonance magnétique nucléaire (RMN) de ¹H et ¹⁹F (figure 4).

### Exemple 2

### Préparation d'un poly(2,3,4,5,6-pentafluorostyrène) fonctionnalisé par un mercapto-alcool

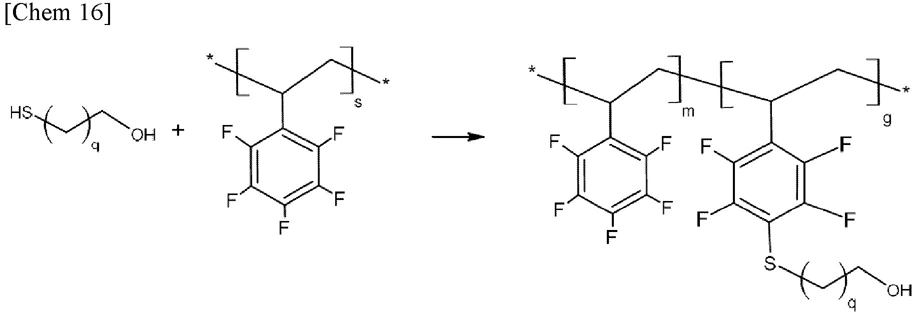

### 2.1. Fonctionnalisation du "PPFS-03" synthétisé en exemple 1.1 par le 6-mercaptohexan-1-ol ("PPFS-g-S-OH-01") - taux de greffage de 20%

Dans un ballon bicol de 100 mL, 6,2 g de "PPFS-03" synthétisé en exemple 1.1 (1 équivalent) sont solubilisés dans 62 mL de MEK sous agitation à température ambiante. Après solubilisation, 1,1 mL de 6-mercaptohexan-1-ol (0,25 équivalent) sont ajoutés au ballon. Après 5 min d'agitation, 0,5 mL de DBU (0,1 équivalent) sont introduits dans le milieu réactionnel. Le milieu réactionnel est mis sous agitation pendant 6h à température ambiante.

Après le temps de réaction, le milieu réactionnel est directement précipité dans du MeOH froid. Le précipité est filtré. Une poudre solide blanche est obtenue.

Le taux de greffage molaire, dit encore taux de substitution, en 6-mercaptohexan-1-ol sur les unités de répétition de PPFS est estimé par RMN ¹⁹F (figure 5) à 20%.

Le produit est nommé "PPFS-g-S-OH-01" ou encore « PPFS-g_{0,2}-S-OH ».

### 2.2. Fonctionnalisation du "PPFS-03" synthétisé en exemple 1.1 par le 6-mercaptohexan-1-ol ("PPFS-g-S-OH-02") - taux de greffage 35%

Dans un ballon bicol de 50 mL, 1 g de "PPFS-03" synthétisé en exemple 1.1 (1 équivalent) est solubilisé dans 10 mL de MEK sous agitation à température ambiante. Après solubilisation, 285 µL de 6-mercaptohexan-1-ol (0,4 équivalent) sont ajoutés au ballon. Après 5 min d'agitation, 162 µL de DBU (0,2 équivalent) sont introduits dans le milieu réactionnel. Le milieu réactionnel est mis sous agitation pendant 6h à température ambiante.

Après le temps de réaction, le milieu réactionnel est directement précipité dans du MeOH froid. Le précipité est filtré. Un produit solide blanc est obtenu.

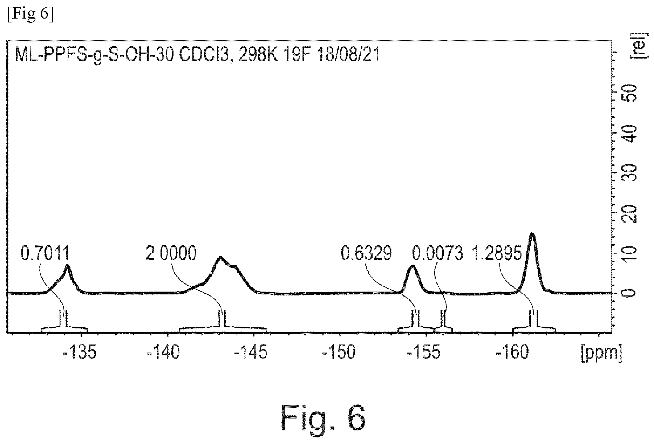

Le taux de greffage molaire, dit encore taux de substitution, en 6-mercaptohexan-1-ol sur les unités de répétition de PPFS est estimé par RMN ¹⁹F (figure 6) à 35%.

Le produit est nommé "PPFS-g-S-OH-02" ou encore « PPFS-g_{0,35}-S-OH ».

### Exemple 3

### Préparation d'un polymère peigne poly(2,3,4,5,6-pentafluorostyrène) porteur de greffons poly(triméthylène carbonate) (PPFS-g-S-PTMC)

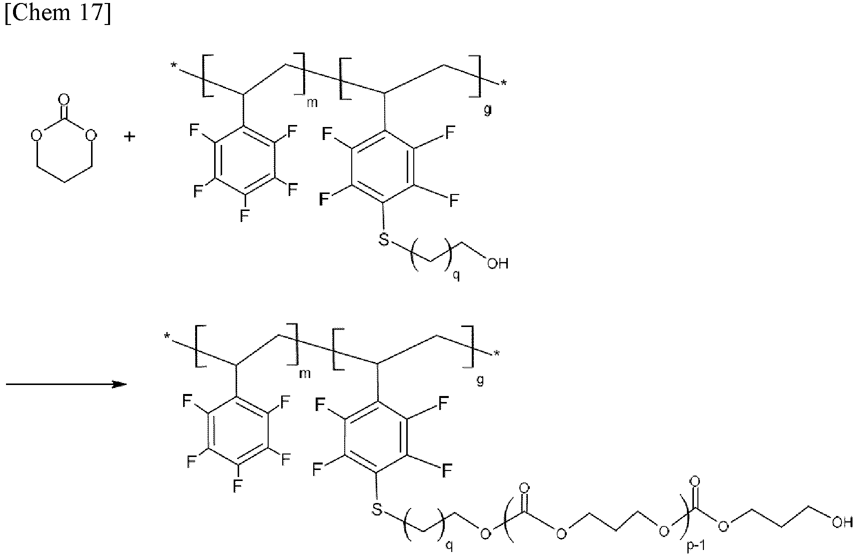

### 3.1. Synthèse d'un polymère peigne PPFS-g_{0,2}-S-PTMC₁₀₀₀-OH ("PPFS-g-S-PTMC-OH-

1 g de "PPFS-g-S-OH-01" synthétisé en exemple 2.1 (1 équivalent) et 1,41 g de TMC (15 équivalents) sont introduits dans un ballon bicol de 50 mL. Le montage est mis sous flux d'argon. 15 mL de DCM sont ajoutés au ballon afin de solubiliser le PPFS fonctionnalisé et le TMC. Après solubilisation, 0,29 g de DPP (1,25 équivalents) sont ajoutés au ballon. Le milieu réactionnel est maintenu sous agitation pendant 48h.

Après le temps de réaction, le milieu réactionnel est directement précipité dans du MeOH froid. Le produit obtenu, sous la forme d'un polymère visqueux transparent, est solubilisé dans du DCM et précipité dans un mélange acétone/MeOH afin d'éliminer les chaînes de PTMC non greffées au PPFS. Le produit ainsi purifié est nommé "PPFS-g-S-PTMC-OH-03".

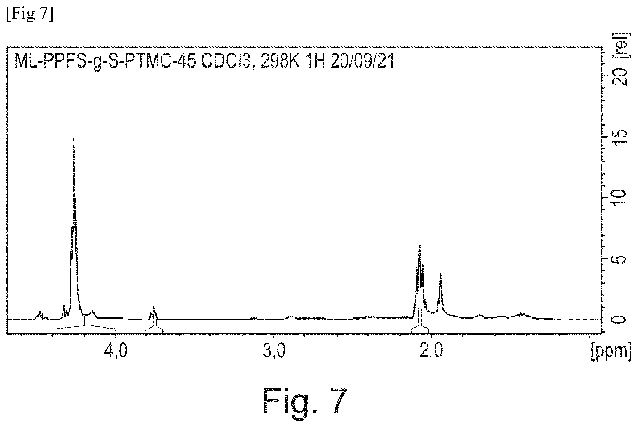

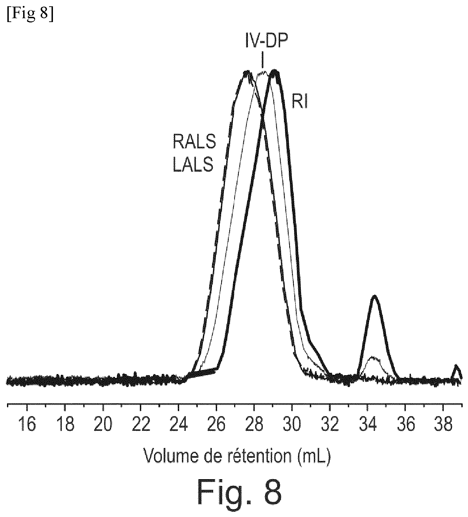

Le polymère obtenu est caractérisé par résonance magnétique nucléaire (RMN) de ¹H (CDCl₃, 298K, 400MHz) (figure 7) et par CES (THF, 30°C, calibration TDS) (figure 8). L'élimination de la majorité des chaînes de PTMC non greffées sur le PPFS est confirmée par CES comme représenté en figure 8.

La masse molaire moyenne en nombre des chaînes de PTMC est estimée par RMN ¹H à 1000 g/mol.

### 3.2. Synthèse d'un polymère peigne PPFS-g_{0,2}-S-PTMC₈₀₀-OH ("PPFS-g-S-PTMC-OH-04")

0,5 g de "PPFS-g-S-OH-01" synthétisé en exemple 2.1 (1 équivalent) et 0,7 g de TMC (15 équivalents) sont introduits dans un ballon bicol de 50 mL. Le montage est mis sous flux d'argon. 7 mL de DCM sont ajoutés au ballon afin de solubiliser le PPFS fonctionnalisé et le TMC. Après solubilisation, 0,1 g de DPP (1 équivalent) sont ajoutés au ballon. Le milieu réactionnel est maintenu sous agitation pendant 20h à température ambiante.

Après le temps de réaction, le milieu réactionnel est directement précipité dans du MeOH froid. Après séchage, le produit, sous forme visqueux transparent, est obtenu. Il est nommé "PPFS-g-S-PTMC-OH-04".

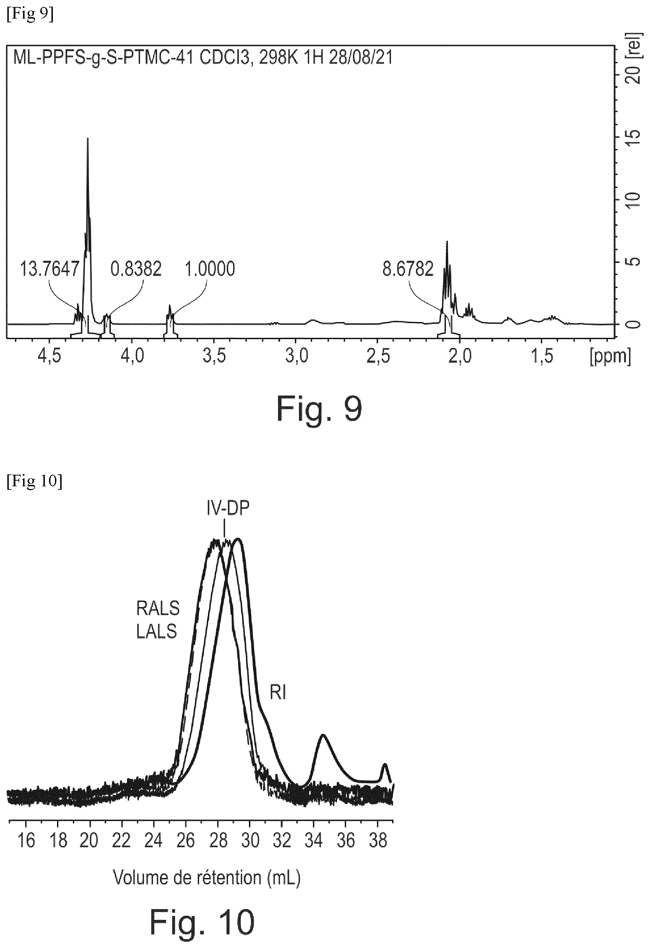

Le polymère obtenu est caractérisé par résonance magnétique nucléaire (RMN) de ¹H (CDCl₃, 298K, 400MHz) (figure 9) et par CES (THF, 30°C, calibration TDS) (figure 10). L'élimination des chaînes de PTMC non greffées sur le PPFS est confirmée par CES.

La masse molaire moyenne en nombre des chaînes de PTMC est estimée par RMN ¹H à 800 g/mol.

### Exemple 4

### Préparation d'électrolytes et propriétés électrochimiques

Le polymère peigne "PPFS-g-S-PTMC-OH-03", synthétisé en exemple 3.1 (762 mg) est mélangé avec du sel de lithium LiTFSI (112,5 mg) dans du THF à 56°C.

Après évaporation du solvant, l'électrolyte est séché sous vide à 80°C. L'électrolyte solide est ensuite incorporé au sein d'une pile bouton symétrique cale (acier inoxydable)/ électrolyte/cale (acier inoxydable) pour la détermination de sa conductivité ionique par EIS (« Electrochemical Impedance Spectroscopy »).

Un électrolyte solide est également préparé et incorporé dans une pile bouton selon un protocole similaire à celui décrit précédemment, à base du polymère peigne "PPFS-g-S-PTMC-OH-04" synthétisé en exemple 3.2.

Dans ces électrolytes, les quantités de polymères en peigne et de sel de lithium sont ajustées de manière à ce que le ratio molaire CO₃/Li soit de 15.

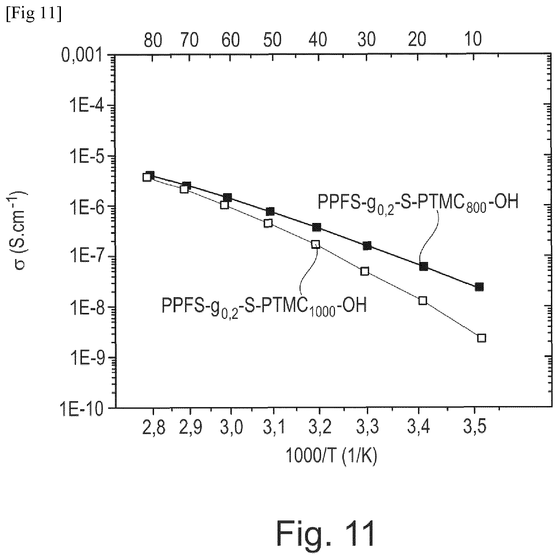

La figure 11 représente l'évolution de la conductivité ionique des électrolytes polymères formés en fonction de la température et témoigne d'une bonne conductivité ionique.

### Liste des documents cités

[1] Mindemark et al., Progress in Polymer Science, 81:114-43 (2018).
[2] Bocharova et al., Macromolecules, 53:4141-57 (2020).
[3] Bouchet et al., Innovations technologiques (2015).
[4] Li et al., Progress in Polymer Science, 122:101453 (2021).
[5] EP 3 865 533 A1.
[6] EP 3 865 532 A1.
[7] Atanasov et al., Solid State Ionics, 9 (2013).
[8] Hiorns et al.. Polymer, 43:3365-9 (2002).
[9] EP 3 763 748 A1.
[10] Yin, Thiol-para-fluoro modified PPFS as building blocks for the design of silica-based nanocomposite and layer by layer self-assembled thin films (2018).
[11] Yin, European Polymer Journal, 10 (2018).
[12] Fukushima, Chapter 7, Polymer Chemistry Series, Cambridge: Royal Society of Chemistry (2018).
[13] Makiguchi et al, Macromolecules, 44:1999-2005 (2011).
[14] Makiguchi et al., Macromolecules, 46:1772-82 (2013).
[15] Liu et al.. Polym Chem, 7:5526-35 (2016).

## Revendications

1. Procédé de préparation d'un polymère en peigne comprenant au moins les étapes consistant en :
(i) disposer d'un polymère formé à partir de monomères 1-éthényl- et/ou 1-allyl- 2,3,4,5,6-pentafluorobenzène, dit « polymère de type PPFS », destiné à former la chaîne principale du polymère en peigne ;
(ii) procéder à la fonctionnalisation d'une partie des groupements pentafluorophényle des unités monomériques du polymère de type PPFS par des fonctions hydroxyles pendantes, par réaction dudit polymère de type PPFS avec au moins une molécule, dite « mercapto-alcool », comportant une ou plusieurs fonctions hydroxyles libres, de préférence une seule fonction hydroxyle libre, et une fonction thiol libre, ladite fonctionnalisation faisant intervenir une réaction de substitution nucléophile entre l'atome de fluor en position *para* du groupement pentafluorophényle et la fonction thiol portée par ledit mercapto-alcool; et
(iii) procéder à la formation de chaînes latérales de type polyester/polycarbonate sur le polymère PPFS fonctionnalisé obtenu en étape (ii), par polymérisation par ouverture de cycle à partir d'au moins un monomère cyclique de cinq à huit chaînons choisi parmi les lactones et les carbonates cycliques.

2. Procédé selon la revendication précédente, dans lequel ladite réaction de substitution nucléophile en étape (ii) pour la fonctionnalisation dudit polymère de type PPFS par des fonctions hydroxyles pendantes est opérée en présence d'une base aprotique plus faible que l'hydrure de sodium, l'hydroxyde de sodium et l'hydroxyde de potassium, de préférence d'une base aprotique présentant un pKa strictement inférieur à 15 et strictement supérieur à 10, en particulier strictement inférieur à 14, plus particulièrement inférieur ou égal à 13, voire compris entre 10,2 et 13, tels que le 1,8-diazabicyclo[5.4.0]undéc-7-ène (DBU) ou la triéthylamine (TEA).

3. Procédé selon la revendication 1 ou 2, dans lequel ledit polymère de type PPFS est un poly(2,3,4,5,6-pentafluorostyrène).

4. Procédé selon l'une quelconque des revendications précédentes, dans lequel ledit polymère de type PPFS présente une masse molaire moyenne en nombre Mₙ, déterminée par chromatographie d'exclusion stérique, supérieure ou égale à 10 000 g.mol⁻¹, en particulier comprise entre 10 000 g.mol⁻¹ et 1 000 000 g.mol⁻¹, en particulier entre 40 000 g.mol⁻¹ et 600 000 g.mol⁻¹, plus particulièrement comprise entre 40 000 g.mol⁻¹ et 400 000 g.mol⁻¹.

5. Procédé selon l'une quelconque des revendications précédentes, dans lequel la fonctionnalisation en étape (ii) met en œuvre un ou plusieurs mercapto-alcools comportant une seule fonction hydroxyle libre, en particulier choisis parmi les mercapto-alcanols, plus particulièrement choisis parmi le 4-mercaptobutan-1-ol, le 5-mercaptopentan-1-ol, le 6-mercaptohexan-1-ol et le 7-mercaptoheptan-1-ol, de préférence le 6-mercaptohexan-1-ol.

6. Procédé selon l'une quelconque des revendications précédentes, dans lequel le ou lesdits mercapto-alcools selon l'invention et ledit polymère de type PPFS sont mis en œuvre dans un rapport molaire mercapto-alcool(s) / unités monomériques du polymère de type PPFS compris entre 0,05 et 0,5, notamment entre 0,1 et 0,5.

7. Procédé selon l'une quelconque des revendications précédentes, dans lequel les chaînes polymériques latérales, de préférence de type homopolymère, sont formées à partir d'un ou plusieurs monomère(s) cyclique(s) choisi(s) parmi le triméthylène carbonate et la ε-caprolactone.

8. Procédé selon l'une quelconque des revendications précédentes, dans lequel la réaction de polymérisation par ouverture de cycle en étape (iii) est opérée en présence d'un catalyseur, en particulier d'un catalyseur organique, de préférence choisi parmi le diphényl phosphate (DPP) et le 1,1' binaphtyl 2,2'diyl hydrogen phosphate (BNPH).

9. Procédé selon l'une quelconque des revendications précédentes, comprenant en outre au moins une étape de purification du polymère en peigne, ladite étape de purification étant opérée à partir du milieu réactionnel obtenu à l'issue de l'étape (iii) par précipitation du polymère en peigne dans du méthanol ; ou par solubilisation du polymère en peigne récupéré à l'issue de l'étape (iii) dans un solvant organique, par exemple dans du dichlorométhane (DCM), de l'acétone, du tétrahydrofurane (THF), de la méthyléthylcétone (MEK), de la N,N-diméthylformamide (DMF) ou leurs mélanges, en particulier du DCM, puis par précipitation du polymère peigne dans un mélange d'un premier solvant choisi parmi le méthanol, l'éthanol, le diéthyl éther et leurs mélanges, et d'un deuxième solvant choisi parmi le DCM, l'acétone, le THF, la MEK, la DMF et leurs mélanges, en particulier dans un mélange acétone/méthanol, suivie d'une séparation liquide/solide, par exemple une filtration, et d'un séchage.

10. Procédé selon l'une quelconque des revendications précédentes, comprenant en outre une étape de protection des fonctions hydroxyles présentes aux extrémités des chaînes polycarbonates/polyesters latérales dudit polymère peigne, par réaction avec au moins un composé, dit agent de protection, choisi parmi les chlorures d'acyle, les anhydrides d'acide et les isocyanates.

11. Polymère en peigne, comprenant une chaîne principale de type PPFS formée à partir de monomères 1-éthényl- et/ou 1-allyl- 2,3,4,5,6-pentafluorobenzène, une partie des unités monomériques de la chaîne principale étant porteuse de chaînes latérales polymériques, dites chaînes polycarbonates/polyesters, formées à partir d'au moins un monomère cyclique de cinq à huit chaînons choisi parmi des lactones et des carbonates cycliques ; lesdites chaînes polymériques latérales étant greffées *en para* des groupes pentafluorophényle par l'intermédiaire de liaisons thioéther.

12. Polymère en peigne selon la revendication précédente, ledit polymère étant obtenu par le procédé défini selon l'une quelconque des revendications 1 à 10.

13. Polymère en peigne selon la revendication 11 ou 12, dans lequel lesdites chaînes polycarbonates/polyesters présentent une masse molaire moyenne en nombre, déterminé par exemple par analyse RMN ¹H, comprise entre 800 g.mol⁻¹ et 10 000 g.mol⁻¹, en particulier entre 800 g.mol⁻¹ et 5 000 g.mol⁻¹, plus particulièrement inférieure ou égale à 2000 g.mol⁻¹, notamment comprise entre 800 g.mol⁻¹ et 2000 g.mol⁻¹, voire entre 800 g.mol⁻¹ et 1500 g.mol⁻¹.

14. Polymère en peigne selon l'une quelconque des revendications 11 à 13, présentant un taux de greffage molaire en chaînes latérales, déterminé par résonance magnétique nucléaire (RMN) du fluor F¹⁹, inférieur ou égal à 35 %, en particulier compris entre 1 % et 35 %, plus particulièrement entre 10 % et 30 %.

15. Electrolyte solide, notamment de type électrolyte polymérique solide (SPE) ou électrolyte solide hybride (HSE), comprenant, voire étant formé de :
- au moins un polymère en peigne tel qu'obtenu selon le procédé de l'une quelconque des revendications 1 à 10 ou tel que défini selon l'une quelconque des revendications 11 à 14, de préférence dont les fonctions hydroxyles aux extrémités des chaînes latérales greffées sont protégées ;
- au moins un sel de métal alcalin ou alcalino-terreux, en particulier un sel de lithium ; et
- éventuellement une ou plusieurs charges inorganiques.

16. Système électrochimique, en particulier un dispositif de stockage de l'énergie, notamment une batterie rechargeable, en particulier une batterie au lithium, comprenant un électrolyte solide, en particulier un film d'électrolyte solide, tel que défini en revendication 15.

## Patentansprüche

1. Verfahren zur Herstellung eines Kammpolymers, das mindestens folgende Schritte umfasst:
i) Bereitstellen eines Polymers, das aus 1-Ethenyl- und/oder 1-Allyl-2,3,4,5,6-pentafluorbenzol-Monomeren gebildet ist, das als "Polymer vom PPFS-Typ" bezeichnet wird und dazu bestimmt ist, die Hauptkette des Kammpolymers zu bilden;
ii) Funktionalisieren eines Teils der Pentafluorphenylgruppen der Monomereinheiten des Polymers vom PPFS-Typ mit seitenständigen Hydroxylfunktionen durch Umsetzung des Polymers vom PPFS-Typ mit mindestens einem Molekül, das als "Mercaptoalkohol" bezeichnet wird und eine oder mehrere freie Hydroxylfunktionen, vorzugsweise eine einzige freie Hydroxylfunktion, und eine freie Thiolfunktion enthält, wobei die Funktionalisierung eine nucleophile Substitutionsreaktion zwischen dem Fluoratom in der *para-*Position der Pentafluorphenylgruppe und der Thiolfunktion des Mercaptoalkohols beinhaltet; und
iii) Bilden von Polyester/Polycarbonat-Seitenketten auf dem in Schritt (ii) erhaltenen funktionalisierten PPFS-Polymer durch Ringöffnungspolymerisation ausgehend von mindestens einem fünf- bis achtgliedrigen cyclischen Monomer, das aus Lactonen und cyclischen Carbonaten ausgewählt wird.

2. Verfahren nach dem vorhergehenden Anspruch, bei dem die nucleophile Substitutionsreaktion in Schritt (ii) zur Funktionalisierung des Polymers vom PPFS-Typ mit seitenständigen Hydroxylfunktionen in Gegenwart einer aprotischen Base, die schwächer als Natriumhydrid, Natriumhydroxid und Kaliumhydroxid ist, vorzugsweise einer aprotischen Base, die einen pKa-Wert streng kleiner als 15 und streng größer als 10, speziell streng kleiner als 14, spezieller kleiner oder gleich 13 oder sogar zwischen 10,2 und 13 aufweist, wie 1,8-Diazabicyclo[5.4.0]undec-7-en (DBU) oder Triethylamin (TEA), durchgeführt wird.

3. Verfahren nach Anspruch 1 oder 2, wobei es sich bei dem Polymer vom PPFS-Typ um Poly(2,3,4,5,6-pentafluorstyrol) handelt.

4. Verfahren nach einem der vorhergehenden Ansprüche, bei dem das Polymer vom PPFS-Typ eine durch Größenausschlusschromatographie bestimmte zahlenmittlere Molmasse Mₙ größer oder gleich 10.000 g.mol⁻¹, speziell zwischen 10.000 g.mol⁻¹ und 1.000.000 g.mol⁻¹, speziell zwischen 40.000 g.mol⁻¹ und 600.000 g.mol⁻¹, spezieller zwischen 40.000 g.mol⁻¹ und 400.000 g.mol⁻¹, aufweist.

5. Verfahren nach einem der vorhergehenden Ansprüche, bei dem man bei der Funktionalisierung in Schritt (ii) einen oder mehrere Mercaptoalkohole mit einer einzigen freien Hydroxylfunktion, die speziell aus Mercaptoalkanolen ausgewählt werden und die spezieller aus 4-Mercaptobutan-1-ol, 5-Mercaptopentan-1-ol, 6-Mercaptohexan-1-ol und 7-Mercaptoheptan-1-ol ausgewählt werden, vorzugsweise 6-Mercaptohexan-1-ol, verwendet.

6. Verfahren nach einem der vorhergehenden Ansprüche, bei dem der oder die erfindungsgemäßen Mercaptoalkohole und das Polymer vom PPFS-Typ in einem molaren Verhältnis Mercaptoalkohol(e)/Monomereinheiten des Polymers vom PPFS-Typ zwischen 0,05 und 0,5, insbesondere zwischen 0,1 und 0,5, verwendet werden.

7. Verfahren nach einem der vorhergehenden Ansprüche, bei dem die Polymer-Seitenketten, vorzugsweise vom Homopolymer-Typ, ausgehend von einem oder mehreren cyclischen Monomeren gebildet werden, die aus Trimethylencarbonat und ε-Caprolacton ausgewählt wird bzw. werden.

8. Verfahren nach einem der vorhergehenden Ansprüche, bei dem die Ringöffnungspolymerisationsreaktion in Schritt (iii) in Gegenwart eines Katalysators, insbesondere eines organischen Katalysators, der vorzugsweise aus Diphenylphosphat (DPP) und 1,1'-Binaphthyl-2,2'-diylhydrogenphosphat (BNPH) ausgewählt wird, durchgeführt wird.

9. Verfahren nach einem der vorhergehenden Ansprüche, das ferner mindestens einen Schritt der Reinigung des Kammpolymers umfasst, wobei der Reinigungsschritt ausgehend von dem am Ende von Schritt (iii) erhaltenen Reaktionsmedium durch Ausfällung des Kammpolymers in Methanol oder durch Solubilisierung des am Ende von Schritt (iii) gewonnenen Kammpolymers in einem organischen Lösungsmittel, beispielsweise in Dichlormethan (DCM), Aceton, Tetrahydrofuran (THF), Methylethylketon (MEK), N,N-Dimethylformamid (DMF) oder Mischungen davon, speziell DCM, und anschließende Ausfällung des Kammpolymers aus einer Mischung eines ersten Lösungsmittels, das aus Methanol, Ethanol, Diethylether und Mischungen davon ausgewählt wird, und eines zweiten Lösungsmittels, das aus DCM, Aceton, THF, MEK, DMF und Mischungen davon ausgewählt wird, insbesondere in einem Aceton/Methanol-Gemisch, mit nachfolgender Flüssig/Fest-Trennung, beispielsweise einer Filtration, und Trocknung durchgeführt wird.

10. Verfahren nach einem der vorhergehenden Ansprüche, ferner umfassend einen Schritt des Schützens der Hydroxylfunktionen, die an den Enden der Polycarbonat/Polyester-Seitenketten des Kammpolymers vorliegen, durch Umsetzung mit mindestens einer Verbindung, die als Schutzmittel bezeichnet wird und aus Acylchloriden, Säureanhydriden und Isocyanaten ausgewählt wird.

11. Kammpolymer, umfassend eine Hauptkette vom PPFS-Typ, die aus 1-Ethenyl- und/oder 1-Allyl-2,3,4,5,6-pentafluorbenzol-Monomeren gebildet ist, wobei ein Teil der Monomereinheiten der Hauptkette polymere Seitenketten, die als Polycarbonat/Polyester-Ketten bezeichnet werden und ausgehend von mindestens einem fünf- bis achtgliedrigen cyclischen Monomer, das aus Lactonen und cyclischen Carbonaten ausgewählt ist, gebildet werden, trägt; wobei die polymeren Seitenketten in para-Position zu Pentafluorphenylgruppen über Thioetherbindungen aufgepfropft sind.

12. Kammpolymer nach dem vorhergehenden Anspruch, wobei das Polymer durch das Verfahren nach einem der Ansprüche 1 bis 10 erhalten wird.

13. Kammpolymer nach Anspruch 11 oder 12, wobei die Polycarbonat/Polyester-Ketten eine beispielsweise durch ¹H-NMR-Analyse bestimmte zahlenmittlere Molmasse zwischen 800 g.mol⁻¹ und 10.000 g.mol⁻¹, speziell zwischen 800 g.mol⁻¹ und 5000 g.mol⁻¹, spezieller kleiner oder gleich 2000 g.mol⁻¹, insbesondere zwischen 800 g.mol⁻¹ und 2000 g.mol ⁻¹ oder sogar zwischen 800 g.mol⁻¹ und 1500 g.mol⁻¹ aufweisen.

14. Kammpolymer nach einem der Ansprüche 11 bis 13 mit einem durch Kernspinresonanz (NMR) von F¹⁹-Fluor bestimmten molaren Seitenkettenpfropfgrad kleiner oder gleich 35 %, speziell zwischen 1 % und 35 %, spezieller zwischen 10 % und 30 %.

15. Festelektrolyt, insbesondere vom Typ fester Polymerelektrolyt (SPE) oder fester Hybridelektrolyt (HSE), umfassend, oder sogar gebildet aus,:
- mindestens ein nach dem Verfahren nach einem der Ansprüche 1 bis 10 gebildetes oder nach einem der Ansprüche 11 bis 14 definiertes Kammpolymer, wobei vorzugsweise die Hydroxylfunktionen an den Enden der aufgepfropften Seitenketten geschützt sind;
- mindestens ein Alkali- oder Erdalkalimetallsalz, speziell ein Lithiumsalz; und
- gegebenenfalls einen oder mehrere anorganische Füllstoffe.

16. Elektrochemisches System, speziell Energiespeicher, insbesondere wiederaufladbare Batterie, insbesondere Lithium-Batterie, umfassend einen wie in Anspruch 15 definierten Festelektrolyt, speziell einen Festelektrolytfilm.

## Claims

1. Process for preparing a comb polymer comprising at least the steps consisting in:
(i) providing a polymer formed from 1-ethenyl- and/or 1-allyl-2,3,4,5,6-pentafluorobenzene monomers, referred to as "PPFS-type polymer", which is intended to form the main chain of the comb polymer;
(ii) functionalizing a portion of the pentafluorophenyl groups of the monomer units of the PPFS-type polymer with pendent hydroxyl functions, by reacting said PPFS-type polymer with at least one molecule, referred to as "mercapto alcohol", comprising one or more free hydroxyl functions, preferably just one free hydroxyl function, and a free thiol function, said functionalization involving a nucleophilic substitution reaction between the fluorine atom in the *para* position of the pentafluorophenyl group and the thiol function borne by said mercapto alcohol; and
(iii) forming side chains of polyester/polycarbonate type on the functionalized PPFS polymer obtained in step (ii), by ring-opening polymerization proceeding from at least one five- to eight-membered cyclic monomer chosen from lactones and cyclic carbonates.

2. Process according to the preceding claim, wherein said nucleophilic substitution reaction in step (ii) for functionalizing said PPFS-type polymer with pendent hydroxyl functions is performed in the presence of an aprotic base that is weaker than sodium hydride, sodium hydroxide and potassium hydroxide, preferably an aprotic base having a pKa of strictly less than 15 and strictly greater than 10, in particular strictly less than 14, more particularly less than or equal to 13, or even of between 10.2 and 13, such as 1,8-diazabicyclo[5.4.0]undec-7-ene (DBU) or triethylamine (TEA).

3. Process according to Claim 1 or 2, wherein said PPFS-type polymer is a poly(2,3,4,5,6-pentafluorostyrene).

4. Process according to any one of the preceding claims, wherein said PPFS-type polymer has a number-average molar mass Mₙ, determined by size exclusion chromatography, of greater than or equal to 10 000 g.mol⁻¹, in particular of between 10 000 g.mol⁻¹ and 1 000 000 g.mol⁻¹, in particular between 40 000 g.mol⁻¹ and 600 000 g.mol⁻¹, more particularly of between 40 000 g.mol⁻¹ and 400 000 g.mol⁻¹.

5. Process according to any one of the preceding claims, wherein the functionalization in step (ii) employs one or more mercapto alcohols comprising just one free hydroxyl function, in particular chosen from mercapto alkanols, more particularly chosen from 4-mercaptobutan-1-ol, 5-mercaptopentan-1-ol, 6-mercaptohexan-1-ol and 7-mercaptoheptan-1-ol, preferably 6-mercaptohexan-1-ol.

6. Process according to any one of the preceding claims, wherein said mercapto alcohol(s) according to the invention and said PPFS-type polymer are employed in a mercapto alcohol(s) / monomer units of the PPFS-type polymer molar ratio of between 0.05 and 0.5, in particular between 0.1 and 0.5.

7. Process according to any one of the preceding claims, wherein the polymeric side chains, preferably of homopolymer type, are formed from one or more cyclic monomers chosen from trimethylene carbonate and ε-caprolactone.

8. Process according to any one of the preceding claims, wherein the ring-opening polymerization reaction in step (iii) is performed in the presence of a catalyst, in particular an organic catalyst, preferably chosen from diphenyl phosphate (DPP) and 1,1'-binaphthyl-2,2'-diyl hydrogenphosphate (BNPH).

9. Process according to any one of the preceding claims, further comprising at least one step of purifying the comb polymer, said purification step being performed using the reaction medium obtained at the end of step (iii) by precipitating the comb polymer in methanol; or by dissolving the comb polymer recovered at the end of step (iii) in an organic solvent, for example in dichloromethane (DCM), acetone, tetrahydrofuran (THF), methyl ethyl ketone (MEK), N,N-dimethylformamide (DMF), or mixtures thereof, in particular DCM, and then by precipitating the comb polymer in a mixture of a first solvent chosen from methanol, ethanol, diethyl ether, and mixtures thereof, and of a second solvent chosen from DCM, acetone, THF, MEK, DMF, and mixtures thereof, in particular in an acetone/methanol mixture, followed by liquid/solid separation, for example filtration, and drying.

10. Process according to any one of the preceding claims, further comprising a step of protecting the hydroxyl functions present at the ends of the polycarbonate/polyester side chains of said comb polymer, by reaction with at least one compound, referred to as protecting agent, chosen from acyl chlorides, acid anhydrides and isocyanates.

11. Comb polymer, comprising a main chain of PPFS type formed from 1-ethenyl- and/or 1-allyl-2,3,4,5,6-pentafluorobenzene monomers, a portion of the monomer units of the main chain bearing polymeric side chains, referred to as polycarbonate/polyester chains, formed from at least one five- to eight-membered cyclic monomer chosen from lactones and cyclic carbonates; said polymeric side chains being grafted in the *para* position of the pentafluorophenyl groups via thioether bonds.

12. Comb polymer according to the preceding claim, said polymer being obtained by the process defined according to any one of Claims 1 to 10.

13. Comb polymer according to Claim 11 or 12, wherein said polycarbonate/polyester chains have a number-average molar mass, determined for example by ¹H NMR analysis, of between 800 g.mol⁻¹ and 10 000 g.mol⁻¹, in particular between 800 g.mol⁻¹ and 5000 g.mol⁻¹, more particularly of less than or equal to 2000 g.mol⁻¹, especially of between 800 g.mol⁻¹ and 2000 g.mol⁻¹, or even between 800 g.mol⁻¹ and 1500 g.mol⁻¹.

14. Comb polymer according to any one of Claims 11 to 13, having a molar degree of grafting of side chains, determined by ¹⁹F fluorine nuclear magnetic resonance (NMR), of less than or equal to 35%, in particular of between 1% and 35%, more particularly between 10% and 30%.

15. Solid electrolyte, in particular of solid polymer electrolyte (SPE) or hybrid solid electrolyte (HSE) type, comprising, or even being formed of:
- at least one comb polymer as obtained according to the process of any one of Claims 1 to 10 or as defined according to any one of Claims 11 to 14, of which the hydroxyl functions at the ends of the grafted side chains are preferably protected;
- at least one alkali or alkaline earth metal salt, in particular a lithium salt; and
- optionally one or more inorganic fillers.

16. Electrochemical system, in particular an energy storage device, especially a rechargeable battery, in particular a lithium battery, comprising a solid electrolyte, in particular a film of solid electrolyte, as defined in Claim 15.
